# FASCICULE DE BREVET EUROPEEN

(11) **EP 3 760 888 B1**
(45) Date de publication et mention de la délivrance du brevet: **13.04.2022**
(21) Numéro de dépôt: 20184084.0
(22) Date de dépôt: 03.07.2020
(51) Int. Cl.: F16C 43/06, F16C 33/41

(54) **CAGE DE ROULEMENT, ASSEMBLAGE ASSOCIÉ ET PROCÉDÉS DE MONTAGE ET DE DÉMONTAGE ASSOCIÉS**
LAGERKÄFIG, ENTSPRECHENDER ZUSAMMENBAU UND ENTSPRECHENDE MONTAGE- UND DEMONTAGEVERFAHREN
ROLLING BEARING CAGE, ASSOCIATED ASSEMBLY AND ASSOCIATED METHODS FOR MOUNTING AND DEMOUNTING

(30) Priorité: 03.07.2019 FR 1907413; 10.12.2019 FR 1914102
(43) Date de publication de la demande: 06.01.2021
(73) Titulaire: NTN-SNR ROULEMENTS, 74000 Annecy (FR)
(72) Inventeur: CALATRABA, David, 74330 SILINGY (FR); LEFORT, Guillaume, 74000 Annecy (FR); TEILLOU, Cyprien, 74000 Annecy (FR); BONNAUDET, Aurélien, 74000 Anncey (FR); GOUDET, Ivan, 73000 Chambery (FR); PALLANCHARD, Vincent, 74000 Annecy (FR)
(74) Mandataire: Alatis

(56) Documents cités:
- WO-A1-2017/125135
- FR-A1- 2 817 233
- US-A1- 2001 006 138

## Description

### DOMAINE TECHNIQUE DE L'INVENTION

L'invention concerne, de façon générale, le domaine technique des paliers à contact de roulements.

L'invention se rapporte plus spécifiquement à un assemblage muni d'un roulement pour guider en rotation une première bague solidaire notamment d'un sous-ensemble tel qu'une pale d'une hélice à angle de calage variable, par rapport à une deuxième bague solidaire de son support formé par un autre sous-ensemble du type moyeu tournant d'hélice.

### ÉTAT DE LA TECHNIQUE ANTÉRIEURE

De nombreuses pales d'hélice ont un calage variable pour optimiser leur fonctionnement. La pale est alors prolongée par un pivot tournant dans un logement du moyeu de l'hélice ou, plus généralement, d'une pièce de support.

On connaît du document EP 0 324 617 un dispositif de montage dans lequel, ce type de pale est fixé à un moyeu par une de ses extrémités appelée pied de pale. Le pied de la pale peut pivoter, sensiblement selon un axe de référence, dans une chambre du moyeu, au moyen de roulements. L'axe de référence du pied est sensiblement confondu avec celui de la pale. Les roulements sont disposés entre le pied et une paroi latérale de la chambre. Cette paroi, étagée, est de révolution sensiblement autour d'un axe radial du moyeu. Après montage de la pale, l'axe de référence se confond sensiblement avec cet axe radial. La chambre débouche du côté du centre de l'hélice par un côté intérieur et du côté de la pale par un côté extérieur.

Dans le document EP 0 324 617, les roulements comprennent au moins un premier roulement extérieur à rouleaux et un deuxième roulement intérieur à billes à contact oblique, le roulement extérieur à rouleaux étant localisé au voisinage du côté extérieur et le roulement intérieur à billes étant situé au voisinage du côté intérieur.

Lorsque l'hélice tourne, la pale subit deux actions : une force centrifuge ou axiale, fonction de sa vitesse de rotation et de sa masse, et un moment de flexion en pied de pale dû à une force radiale sur la pale résultant de l'interaction de la pale et de l'air qu'elle brasse ainsi que les vibrations du système. Le dispositif de montage enseigné par EP 0 324 617 permet de compenser ces actions : la force axiale est reprise par le roulement intérieur à billes et le moment de flexion est repris par l'ensemble des deux roulements.

Il est également connu du document EP 0 843 635 de pré-charger des roulements dans un ensemble de pied de pale d'hélice afin de permettre aux ensembles de roulements de rester chargés dans toutes les conditions aérodynamiques. Les roulements de pales permettent de changer le pas de la pale en vol, c'est-à-dire en faisant varier son orientation ou angle d'incidence. Cependant, ils servent également à verrouiller la pale dans le moyeu d'hélice. Le pied de pale peut avoir une extrémité élargie de sorte qu'elle ne puisse pas être extraite du moyeu de l'hélice tant que les roulements sont en place.

Dans une telle architecture, un tel roulement ne peut pas être installé assemblé. Le pied de la pale est tout d'abord positionné dans un carter moteur du moyeu de l'hélice puis les billes sont insérées une à une. Il en résulte que les billes retiennent la pale en fonctionnement. Par ailleurs, un tel roulement permet seulement l'orientation des pales en fonctionnement selon son angle de calage de sorte que l'étendue angulaire du déplacement de la pale autour de son axe de référence radial par rapport à l'axe du moyeu est généralement faible, sa vitesse de rotation étant également relativement faible. Une autre contrainte d'un tel roulement à billes est que lesdites billes doivent pouvoir être enlevées pour monter et démonter la pâle afin de pouvoir en assurer la maintenance.

Du fait d'une telle architecture, ce type de roulement à billes n'a pas de cage. Toutefois il a été constaté une usure prématurée des corps roulant, ces fortes dégradations provenant de chocs entre billes dus à l'absence de dispositif les séparant. Une cage suivant le préambule de la revendication 1 est connue de US 2001/006138 A1. Un assemblage suivant le préambule de la revendication 13 est connu de WO 2017/125135 A1.

### EXPOSE DE L'INVENTION

L'invention vise à remédier à tout ou partie des inconvénients de l'état de la technique en proposant notamment un roulement permettant d'éviter la dégradation des billes due aux pressions de contact élevées et aux éventuels chocs entre elles, alors que le volume de logement des corps roulants n'est que peu accessible, pour leur montage ou leur démontage.

L'invention vise également à ne pas rendre plus contraignantes, voire à améliorer, les opérations de maintenance d'un tel roulement en les raccourcissant ou en réduisant leurs coûts.

Pour ce faire est proposé, selon un premier aspect de l'invention, une cage de roulement pour un roulement du type comprenant une première bague présentant une première piste de roulement, une deuxième bague présentant une deuxième piste de roulement, des corps roulants positionnés dans un volume annulaire de roulement entre la première et la deuxième piste de roulement de manière à permettre une rotation relative entre les première et deuxième bagues autour d'un axe de référence du roulement, la cage comportant des alvéoles de logement des corps roulants, la cage étant remarquable en ce qu'elle comprend une interface d'accouplement avec un organe de manœuvre, telle que lorsque l'organe de manœuvre est en prise avec l'interface d'accouplement, la cage de roulement est apte à être entraînée par l'organe de manœuvre en rotation dans une direction prédéterminée par rapport à l'axe de référence.

Grâce à une telle cage de roulement, qui assure notamment une fonction d'espacement et de guidage des corps roulants pendant la phase de roulement, il est possible de manipuler ladite cage de roulement facilement au moyen de l'organe de manœuvre, ceci même si la cage de roulement doit être manipulée dans un environnement laissant peu d'espace pour un outillage standard ou pour un opérateur lors d'opérations de maintenance pour permettre son assemblage ou sa manutention.

Selon une configuration technique particulière, l'interface d'accouplement avec l'organe de manœuvre est configurée pour assurer un accouplement amovible. Une telle caractéristique permet un accouplement et un désaccouplement aisé de la cage de roulement avec l'organe de manœuvre selon le besoin. Suivant un mode de réalisation, l'interface d'accouplement avec l'organe de manœuvre est configurée pour assurer un accouplement par accrochage élastique, aussi appelé clipsage de sorte à permettre une coopération par déformation élastique.

Suivant un mode de réalisation, chaque alvéole de logement d'un corps roulant est configurée pour envelopper un corps roulant de sorte à le maintenir axialement dans ladite alvéole, et assurer le maintien de la cage dans la position requise de roulement durant les phases de fonctionnement. De cette manière la cage de roulement assure la séparation des corps roulants et leur entraînement circonférentiel en position ou phase de maintenance, les corps roulants étant par ailleurs maintenus radialement et axialement par les bagues intérieure et extérieure du roulement en position de roulement. De préférence, les alvéoles sont configurées pour envelopper les corps roulants pour éviter également la centrifugation de la cage de roulement en fonctionnement.

Suivant un mode de réalisation, les alvéoles de logement des corps roulants sont dimensionnées de sorte que les corps roulants peuvent s'échapper desdites alvéoles sous l'effet de leur propre poids, les alvéoles ne retenant pas les corps roulants radialement au moins selon une direction radiale et allant dans le sens de l'axe de référence vers l'extérieure de la cage. De cette manière, lorsqu'un corps roulant n'est pas maintenu radialement par les bagues intérieure et extérieure, l'effort exercé par son propre poids lui suffit pour se désengager de son alvéole de logement. Ceci est particulièrement intéressant pour des opérations de maintenance, par exemple, durant lesquelles les corps roulants sont mis en regard d'un canal d'accès ouvert sur l'espace délimité entre les bagues formant un volume annulaire et mettant en communication le milieu extérieur avec le volume annulaire de roulement, le canal d'accès ayant une section intérieure permettant au moins le passage des corps roulants. De cette manière, le simple fait de déplacer un corps roulant en regard de ce canal d'accès permet le retrait dudit corps roulant de l'espace de roulement.

Suivant un mode de réalisation, la cage de roulement comprend une douille annulaire, configurée notamment pour entourer ou encercler au moins une portion axiale de la première bague, et à partir de laquelle s'étendent axialement des séparations délimitant les alvéoles de réception de corps roulants, la cage de roulement présentant en outre de préférence des ouvertures formées sur la face frontale opposée à ladite douille annulaire. Ceci permet un dégagement de matière garant d'une non-interférence avec les pièces environnantes et pouvant représenter un gain de poids à iso-fonction.

Avantageusement, la douille présente une extrémité axiale, axialement opposée à sa face frontale, comprenant un profil de révolution, continue ou non, configuré pour assurer le centrage de l'organe de manœuvre. Ce profil de révolution peut être cylindrique ou tronconique de sorte à présenter une surface de révolution qui converge vers le diamètre d'une partie qui reçoit l'organe de manœuvre. De cette manière, l'organe de manœuvre est guidé par la douille de la cage de roulement notamment lors de son déplacement axial jusqu'à être en prise avec l'interface d'accouplement de ladite cage de roulement.

Dans le cas par exemple où les corps roulants sont des billes, chaque alvéole présente avantageusement une surface de contact configurée pour être localement complémentaire de celle du corps roulant qu'elle reçoit, la surface de contact pouvant s'étendre par exemple sur une portion d'enveloppe sphérique. De cette manière, la cage de roulement présente au niveau de chaque alvéole une forme épousant localement la forme sphérique des billes pour assurer leur guidage. Notons ici que la surface de contact assure un contact avec le corps roulant du fait de sa fonction de guidage, un tel contact étant nécessaire pour guider un corps roulant. Toutefois, pour ne pas enserrer le corps roulant dans l'alvéole, un jeu d'alvéole prédéterminé est configuré pour ne pas bloquer le corps roulant.

Suivant un mode de réalisation, l'interface d'accouplement comprend des rainures réparties sur sa périphérie et configurées pour recevoir des pattes de crabotage de l'organe de manœuvre. Ces rainures s'étendent avantageusement sur une portion angulaire prédéterminée de la cage de roulement et sont réparties de manière homogène autour de la cage de roulement.

De préférence dans ce cas, la cage de roulement, en particulier l'interface d'accouplement, comprend des parois de guidage configurées pour guider le déplacement de chaque patte de crabotage de l'organe de manœuvre vers leur rainure correspondante. Cela permet un guidage continu destiné à faciliter la manœuvre d'accouplement de l'organe de manœuvre avec la cage de roulement. Dans un mode de réalisation, ces parois de guidage sont dressées radialement par rapport à l'axe de référence et s'étendent sur la périphérie extérieure de la cage de roulement en formant chacune une portion d'hélicoïde ou de spire autour de l'axe de référence.

Selon une caractéristique technique particulière, le mouvement de désaccouplement de l'organe de manœuvre de la cage de roulement comprend une rotation par rapport à l'axe de référence dans une direction opposée à la direction prédéterminée de rotation de la cage de roulement lorsqu'elle est entraînée en rotation par l'organe de manœuvre en prise ensemble.

Suivant un mode de réalisation, l'interface d'accouplement de la cage de roulement comprend au moins une première parmi deux interfaces d'accouplement constituées l'une par des crochets élastiques et l'autre par au moins une rainure, la première des deux interfaces d'accouplement étant configurée pour venir en prise, de préférence pour coopérer par accrochage élastique (ou clipsage) avec une deuxième des deux interfaces d'accouplement portée par l'organe de manœuvre. L'interface d'accouplement est de préférence répartie sur la périphérie de la cage de roulement. Ainsi, dans une configuration donnée, l'interface d'accouplement de la cage de roulement comprend des crochets élastiques configurés pour s'engager élastiquement dans au moins une rainure de l'organe de manœuvre. Dans une autre configuration inverse, l'interface d'accouplement de la cage de roulement comprend au moins une rainure configurée pour recevoir des crochets élastiques de l'organe de manœuvre. Alternativement, ces configurations sont combinées de sorte qu'à la fois la cage de roulement et l'organe de manœuvre comprennent des crochets élastiques, et au moins une rainure configurée pour coopérer ensemble, deux à deux, de manière complémentaire.

Suivant un mode de réalisation, la rainure est bordée du côté recevant les crochets élastiques lors de l'accouplement, par une saillie radiale, la saillie comportant une paroi de guidage pour guider les crochets élastiques durant leur trajectoire d'accouplement, la paroi de guidage étant de préférence configurée pour guider l'organe de manœuvre vers une position centrée par rapport à la cage. De préférence, la paroi de guidage est configurée pour assurer un élargissement élastique des crochets élastiques sur une partie au moins de cette trajectoire.

Selon une caractéristique technique particulière, le mouvement de désaccouplement de l'organe de manœuvre de la cage de roulement comprend, voire consiste en, une translation par rapport à l'axe de référence dans un sens d'un éloignement de l'organe de manœuvre par rapport à la cage de roulement.

Suivant un mode de réalisation, la face frontale de la cage comprend au moins un chanfrein, de préférence situé radialement à l'intérieur, le chanfrein étant bordé par la face frontale et une face interne de la cage. Cela permet de garantir un enveloppement axial plus important du corps roulant par la cage de roulement tout en conservant une distance de sécurité avec les pistes de roulement et ainsi d'occuper plus efficacement l'espace de roulement pour le guidage des corps roulants.

Selon un deuxième aspect, l'invention concerne également un roulement comprenant une première bague présentant une première piste de roulement, une deuxième bague présentant une deuxième piste de roulement, des corps roulants positionnés dans un volume annulaire de roulement entre la première et la deuxième pistes de roulement de manière à permettre une rotation relative entre les première et deuxième bagues autour d'un axe de référence du roulement, la première bague étant mobile par rapport à la deuxième bague, notamment axialement, entre une position de roulement des corps roulants sur les première et deuxième pistes de roulement et une position de maintenance dans laquelle la charge supportée par ces corps roulants est supprimée, le roulement étant remarquable en ce qu'il comporte une cage de roulement comportant tout ou partie des caractéristiques précitées.

Suivant un mode de réalisation, la première bague est déplaçable axialement par rapport à la deuxième bague de façon que la distance entre la première et la deuxième piste de roulement puisse être modifiée.

Suivant un mode de réalisation, les corps roulants sont des billes.

Selon un troisième aspect, l'invention concerne un assemblage d'un premier sous-ensemble mécanique avec un deuxième sous-ensemble mécanique, l'assemblage comprenant un roulement comprenant une première bague présentant une première piste de roulement, une deuxième bague présentant une deuxième piste de roulement, la première bague étant solidaire du premier sous-ensemble et la deuxième bague étant solidaire du deuxième sous-ensemble, des corps roulants positionnés dans un volume annulaire de roulement entre la première et la deuxième pistes de roulement de manière à permettre une rotation relative entre les première et deuxième bagues autour d'un axe de référence du roulement, et un canal d'accès mettant en communication le milieu extérieur avec le volume annulaire de roulement, le canal d'accès ayant une section intérieure permettant au moins le passage des corps roulants, la première bague étant mobile par rapport à la deuxième bague entre une position de roulement des corps roulants sur les première et deuxième pistes de roulement et une position de maintenance dans laquelle la charge supportée par ces corps roulants est supprimée, le roulement comportant une cage comportant des alvéoles de logement des corps roulants, l'assemblage étant remarquable en ce que la cage comprend une interface d'accouplement avec un organe de manœuvre, telle que lorsque l'organe de manœuvre est en prise avec l'interface d'accouplement, la cage de roulement est apte à être entraînée par l'organe de manœuvre en rotation dans une direction prédéterminée par rapport à l'axe de référence.

Suivant un mode de réalisation, le premier sous-ensemble est déplaçable axialement par rapport au deuxième sous-ensemble de façon que la distance entre la première et la deuxième piste de roulement puisse être modifiée. En particulier, le premier sous-ensemble est déplaçable par rapport au deuxième sous-ensemble entre la position de roulement et la position de maintenance, le mouvement relatif des premier et deuxième sous-ensembles entraînant le mouvement des première et deuxième bagues, respectivement.

Suivant un mode de réalisation, l'organe de manœuvre est configuré pour participer au verrouillage axial du premier sous-ensemble par rapport au deuxième sous-ensemble, notamment de la première bague par rapport à la deuxième bague, en position de roulement.

Suivant un mode de réalisation, la cage de roulement et l'organe de manœuvre comprennent un mécanisme d'accouplement amovible entre une position d'accouplement de la cage de roulement avec l'organe de manœuvre dans laquelle des moyens d'accouplement de l'organe de manœuvre sont en prise avec l'interface d'accouplement de la cage de façon que le déplacement de l'organe de manœuvre en rotation dans la direction prédéterminée par rapport à l'axe de référence entraîne le déplacement de la cage de roulement, dans la position de maintenance, et une position désaccouplée permettant le déplacement de l'organe de manœuvre pour verrouiller axialement la première bague par rapport à la deuxième bague, en position de roulement. L'entraînement de la cage par le déplacement de l'organe de manœuvre présente au moins deux fonctionnalités, l'une notamment étant de pouvoir conduire les corps roulants successivement en regard du canal d'accès d'où ils peuvent être retirés, ceci dans une position de maintenance où les corps roulants doivent être évacués de l'espace de roulement, l'autre fonctionnalité étant de pouvoir positionner chaque alvéole de la cage successivement en regard du canal d'accès pour procéder à l'insertion des corps roulants dans l'espace de roulement, toujours dans la position de maintenance, lors d'une phase de maintenance ou du montage d'origine du dispositif. En résumé, le déplacement de l'organe de manœuvre en rotation dans la direction prédéterminée par rapport à l'axe de référence positionne successivement les alvéoles face au canal d'accès d'où les corps roulants peuvent être insérés ou retirés.

Suivant un mode de réalisation, la cage de roulement tourne autour de l'axe du premier sous-ensemble pour déplacer les corps roulants en direction du canal d'accès, ce déplacement étant dans la direction prédéterminée par rapport à l'axe de référence.

Suivant un mode de réalisation, le mécanisme d'accouplement amovible de la cage de roulement avec l'organe de manœuvre comprend des pattes de crabotage formant moyens d'accouplement configurées pour venir en prise dans des rainures complémentaires formant interface d'accouplement. Ces rainures s'étendent avantageusement sur une portion angulaire prédéterminée de la cage de roulement et sont réparties de manière homogène autour de la cage de roulement. Leur étendue angulaire doit être suffisante pour assurer un maintien ferme de la cage en position de maintenance, sans pour autant interdire un déverrouillage ultérieur. Les moyens d'accouplement de l'organe de manœuvre forment donc une interface complémentaire de l'interface d'accouplement de la cage de roulement, les interfaces complémentaires permettant de former ensemble un mécanisme d'accouplement permettant d'assurer l'accouplement des éléments.

Suivant un mode de réalisation, l'interface d'accouplement comprend des parois de guidage pour guider le déplacement de chaque patte de crabotage vers leur rainure correspondante. Cela permet un guidage continu destinée à faciliter la manœuvre d'accouplement de l'organe de manœuvre avec la cage de roulement. Dans un mode de réalisation, ces parois de guidage sont dressées radialement par rapport à l'axe de référence et s'étendent sur la périphérie extérieure de la cage de roulement en formant chacune une portion d'hélicoïde ou de spire autour de l'axe de référence.

Suivant un mode de réalisation, le mécanisme d'accouplement amovible de la cage de roulement avec l'organe de manœuvre comprend des crochets élastiques formant une interface d'accouplement et configurés pour venir en prise sous contrainte élastique dans au moins une rainure formant une interface d'accouplement complémentaire. On notera que la cage présente une forme s'étendant le long d'une enveloppe annulaire, les crochets élastiques étant configurés pour venir en prise à l'intérieur de l'espace annulaire et/ou à l'extérieur de ladite enveloppe annulaire ; en d'autres termes, les crochets élastiques peuvent être intérieur et/ou extérieurs. Les interfaces complémentaires forment ensemble un mécanisme d'accouplement permettant d'assurer l'accouplement des éléments.

Suivant un mode de réalisation, la rainure s'étend sensiblement suivant une enveloppe annulaire par rapport à l'axe de référence, de préférence circonférentielle par rapport à la pièce qui la porte, et présente une ouverture orientée radialement, par exemple vers l'intérieur ou vers l'extérieur.

Suivant un mode de réalisation, les crochets élastiques comportent un corps s'étendant sensiblement axialement, c'est-à-dire parallèlement à l'axe de référence, d'une base solidaire de la pièce qui la porte jusqu'à une extrémité munie d'une tête de fixation s'étendant au moins en partie radialement, et configurée pour venir se loger dans la rainure, en appui contre ladite rainure grâce à la contrainte élastique exercée par le crochet élastique sur, ou dans, la rainure. Avantageusement, un accouplement axial de l'organe de manœuvre avec la cage de roulement, c'est-à-dire un accouplement en translation est assuré par l'accrochage élastique des crochets élastiques dans la ou les rainures associées.

Suivant un mode de réalisation, un accouplement angulaire de l'organe de manœuvre avec la cage de roulement, c'est-à-dire un accouplement en rotation, est assuré par la coopération d'au moins un crochet élastique dans au moins un évidement radial associé. De préférence, l'évidement s'étend suivant un secteur angulaire supérieur à un secteur angulaire d'un crochet élastique, par exemple suivant un secteur angulaire quasi identique, c'est-à-dire très légèrement supérieur, ou juste augmenté d'un jeu fonctionnel. L'évidement peut être traversant, ou non. Bien entendu, l'accouplement en rotation peut être effectué au moyen d'une pluralité d'évidements radiaux, chacun de ces évidements étant configuré pour garantir l'insertion d'un ou plusieurs crochets à l'intérieur d'au moins l'un de ces évidements. Dans une configuration particulière, les évidements peuvent être positionnés l'un par rapport à l'autre pour garantir l'insertion d'un moins un crochet suite à une valeur angulaire de rotation minimale. Suivant un mode de réalisation, les évidements peuvent présenter des dimensions différentes de sorte que des évidements accueillant seulement un crochet ou alors plusieurs crochets élastiques peuvent cohabiter dans un même mode de réalisation. L'accouplement en rotation est effectué dès lors qu'au moins l'un des crochets pénètre dans l'un des évidements.

Une telle configuration, dans laquelle le mécanisme d'accouplement amovible de la cage de roulement avec l'organe de manœuvre comprend des crochets élastiques formant interface d'accouplement configurés pour venir en prise sous contrainte élastique dans au moins une rainure formant une interface d'accouplement complémentaire, présente l'avantage de proposer un mécanisme d'accouplement pouvant, d'une part, être accroché élastiquement ou clipsé axialement quel que soit la position angulaire de l'organe de manœuvre par rapport à la cage et, d'autre part, d'entraîner la cage au moyen de l'organe de manœuvre par une rotation dans une direction prédéterminée par rapport à l'axe de référence, dès lors que, durant la rotation, un crochet élastique pénètre par retour élastique dans sa position de moindre contrainte ou non contrainte dans l'évidement radial et vient se positionner en appui et en butée contre un bord latéral dudit évidement. Une telle configuration permet également de s'affranchir d'un sens prédéterminé de la rotation étant donné que l'utilisateur pourra entraîner la cage en rotation au moyen de l'organe de manœuvre par une rotation dans un sens ou dans l'autre.

Suivant un mode de réalisation, l'organe de manœuvre s'étend le long du premier sous-ensemble de sorte à être accessible de l'extérieur, en vue de sa manipulation. Ceci est d'autant plus avantageux dans une configuration où le deuxième sous-ensemble est situé autour du premier sous-ensemble, les première et deuxième bagues étant coaxiales, et la cage de roulement étant située radialement au moins partiellement entre les première et deuxième bagues et l'organe de manœuvre étant située entre les premier et deuxième sous-ensembles.

Suivant un mode de réalisation, l'organe de manœuvre présente un dispositif de fixation, notamment une portion filetée, configuré pour recevoir un moyen de verrouillage, notamment un flasque de verrouillage, au travers d'un alésage taraudé, le moyen de verrouillage étant maintenu en butée contre le deuxième sous-ensemble en position de roulement pour verrouiller sa position axiale par rapport au deuxième sous-ensemble.

Suivant un mode de réalisation, il comprend un deuxième roulement, situé entre les premier et deuxième sous-ensembles, le deuxième roulement étant espacé axialement du premier roulement. Cela permet d'assurer une meilleure reprise des efforts exercés entre le premier sous-ensemble et le deuxième sous-ensemble. Idéalement, ces roulements sont espacés axialement le plus possible l'un de l'autre et tout du moins suffisamment pour permettre l'introduction des corps roulants.

Suivant un mode de réalisation, des pistes de roulement du deuxième roulement sont tronconiques par rapport à l'axe de référence, les corps roulants du deuxième roulement comprenant des rouleaux, tels que des rouleaux coniques.

Suivant un mode de réalisation, le premier sous-ensemble mécanique est un arbre rotatif dont une première extrémité est supportée en position de roulement, notamment durant les phases de roulage et/ou de fonctionnement de l'hélice, par le deuxième sous-ensemble mécanique.

Suivant un mode de réalisation, le premier sous-ensemble est un pied de pale d'une hélice à angle de calage variable.

Suivant un mode de réalisation, le deuxième sous-ensemble est un moyeu tournant d'une hélice.

Suivant un autre aspect, l'invention concerne également un procédé de montage d'un assemblage comprenant tout ou partie des caractéristiques ci-avant, le procédé de montage étant remarquable en ce qu'il comprend les étapes suivantes :
- mise en place de la cage de roulement en position d'accouplement avec l'organe de manœuvre autour du premier sous-ensemble ;
- mise en place de l'ensemble formé par le premier sous-ensemble, la cage de roulement et l'organe de manœuvre par rapport au deuxième sous-ensemble, le roulement étant placé en position de maintenance ;
- ouverture du canal d'accès de façon que les corps roulants puissent le traverser pour soit venir se positionner soit être positionnés dans des alvéoles délimitées au moins en partie par la cage de roulement en combinaison avec la rotation de la cage dans le sens prédéterminé, c'est-à-dire par le déplacement de la cage en rotation dans un sens prédéterminé autour de son axe de référence ;
- désengagement de la cage de roulement et de l'organe de manœuvre, déplacement de l'organe de manœuvre, et déplacement relatif du premier sous-ensemble par rapport au deuxième sous-ensemble, jusqu'à la position de roulement de l'assemblage ;
- verrouillage axial du premier sous-ensemble mécanique par rapport au deuxième sous-ensemble mécanique, dans la position de roulement.

Suivant un autre aspect, l'invention concerne également un procédé de démontage ou de maintenance d'un roulement comprenant tout ou partie des caractéristiques ci-avant, le procédé de démontage ou de maintenance étant remarquable en ce qu'il comprend les étapes suivantes :
- déverrouillage axial du premier sous-ensemble mécanique par rapport au deuxième sous-ensemble mécanique ;
- déplacement de l'organe de manœuvre vers la cage de roulement pour venir s'engager sur son interface d'accouplement, en position d'accouplement de sorte que le roulement est amené en position de maintenance ;
- déplacement en rotation de la cage de roulement dans un sens prédéterminé autour de son axe de référence pour conduire les corps roulants vers le canal d'accès permettant soit leur retrait par une action appropriée, soit leur sortie sous l'effet de la gravité.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue générale d'un moyeu tournant d'hélice équipé de pales d'hélice à angle de calage variable;
[Fig. 2] : une vue générale en perspective d'une partie d'un moyeu destiné à recevoir un pied de pale d'une hélice à angle de calage variable selon un mode de réalisation;
[Fig. 3] : une vue en écorchée d'un assemblage pour un roulement selon ce mode de réalisation;
[Fig. 4] : une vue en perspective d'une cage selon ce mode de réalisation;
[Fig. 5A] : une vue de face d'une cage de roulement et d'un organe de manœuvre selon ce mode de réalisation en position désaccouplée;
[Fig. 5B] : une vue de face d'une cage de roulement et d'un organe de manœuvre selon ce mode de réalisation en position intermédiaire entre la position désaccouplée et la position accouplée;
[Fig. 5C] : une vue de face d'une cage de roulement et d'un organe de manœuvre selon ce mode de réalisation en position accouplée;
[Fig. 6A] : une vue de face d'une cage de roulement et d'un organe de manœuvre selon ce mode de réalisation en position accouplée, la cage étant équipée de corps roulants;
[Fig. 6B] : une vue de dessus et partielle de la figure 6A;
[Fig. 7A] : une vue en coupe d'un assemblage selon ce mode de réalisation en position de maintenance du roulement et en position accouplée, illustré sans corps roulants;
[Fig. 7B] : une vue en coupe d'un assemblage selon ce mode de réalisation en position de maintenance du roulement et en position accouplée, muni des corps roulants;
[Fig. 7C] : une vue en coupe d'un assemblage selon ce mode de réalisation en position de roulement du roulement et dans une position désaccouplée de la cage du roulement;
[Fig. 8A] : un détail de la figure 7C;
[Fig. 8B] : un détail de la figure 7C;
[Fig. 9] : une vue de face d'une cage de roulement et d'un organe de manœuvre selon un autre mode de réalisation en position désaccouplée;
[Fig. 10A] : une vue en perspective d'une cage et d'une portion d'un organe de manœuvre selon le mode de réalisation de la figure 9, en position désaccouplée;
[Fig. 10B] : une vue en perspective d'une cage et d'une portion d'un organe de manœuvre selon le mode de réalisation de la figure 9, en position accouplée en translation, mais pas en rotation;
[Fig. 10C] : une vue en perspective d'une cage et d'une portion d'un organe de manœuvre selon le mode de réalisation de la figure 9, en position accouplée en translation et en rotation;
[Fig. 11] : une vue en perspective d'une cage selon un autre mode de réalisation, en position accouplée en translation et en rotation;
[Fig. 12A] : un détail, vue en coupe, de la figure 10A;
[Fig. 12B] : un détail, vue en coupe, de la figure 10B;
[Fig. 12C] : un détail, vue en coupe, de la figure 10C;
[Fig. 13A] : une variante de la figure 12C;
[Fig. 13B] : une seconde variante de la figure 12C;
[Fig. 13C] : une troisième variante de la figure 12C;
[Fig. 14A] : un détail, vue en coupe, d'une cage de roulement et d'un organe de manœuvre selon un autre mode de réalisation en position désaccouplée;
[Fig. 14B] : un détail, vue en coupe, d'une cage de roulement et d'un organe de manœuvre selon le mode de réalisation de la figure 14A, en position accouplée en translation;
[Fig. 14C] : un détail, vue en coupe, d'une cage de roulement et d'un organe de manœuvre selon le mode de réalisation de la figure 14A, en position accouplée en rotation;
[Fig. 15A] : un détail, vue en coupe, d'une cage de roulement et d'un organe de manœuvre selon un autre mode de réalisation, en position accouplée en translation;
[Fig. 15B] : un détail, vue en coupe, d'une cage de roulement et d'un organe de manœuvre selon le mode de réalisation de la figure 15A, en position accouplée en rotation;
[Fig. 16A] : une vue en perspective d'une cage et d'une portion d'un organe de manœuvre selon un autre mode de réalisation, en position accouplée en translation et en rotation;
[Fig. 16B] : un détail, vue en coupe, d'une cage de roulement et d'un organe de manœuvre selon le mode de réalisation de la figure 16A, en position accouplée en translation;
[Fig. 16C] : un détail, vue en coupe, d'une cage de roulement et d'un organe de manœuvre selon le mode de réalisation de la figure 16A, en position accouplée en translation et rotation;
[Fig. 17A] : un détail, vue en coupe, d'une cage de roulement et d'un organe de manœuvre selon un autre mode de réalisation, en position accouplée en translation;
[Fig. 17B] : un détail, vue en coupe, d'une cage de roulement et d'un organe de manœuvre selon le mode de réalisation de la figure 17A, en position accouplée en rotation.

Pour plus de clarté, les éléments identiques ou similaires sont repérés par des signes de référence identiques sur l'ensemble des figures.

### DESCRIPTION DÉTAILLÉE D'UN MODE DE RÉALISATION

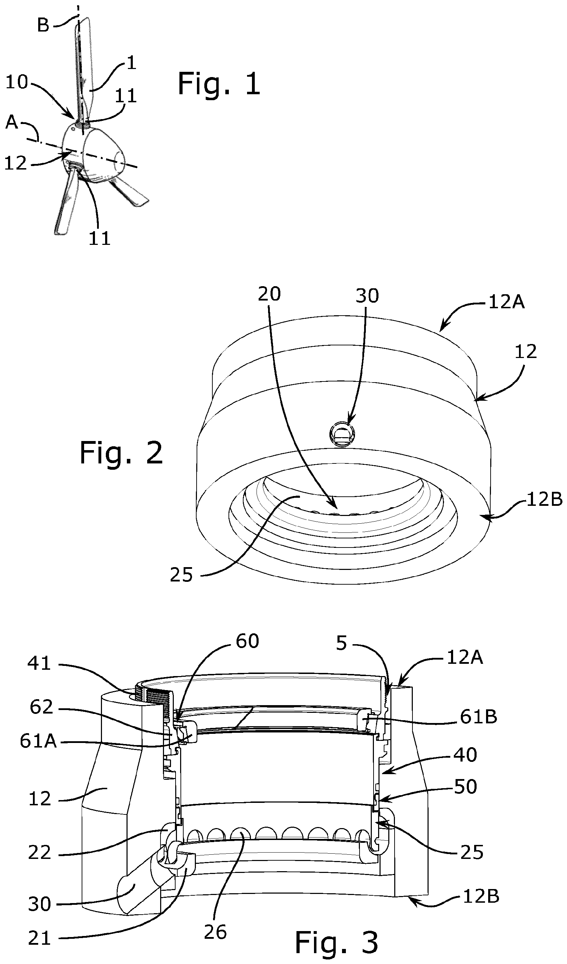

La figure 1 illustre un montage de trois pales **1** du type à angle d'incidence variable dans un moyeu **12** tournant autour d'un axe **A** d'une hélice d'aéronef. Ce type de pale **1** est fixé au moyeu **12** par une de ses extrémités appelée pied **11** de pale **1.** Le pied **11** de la pale **1** peut pivoter, sensiblement selon un axe **B,** dans une chambre **5** du moyeu **12,** au moyen de roulements. L'axe **B** du pied **11** est sensiblement confondu avec celui de la pale **1.**

Les roulements sont disposés entre le pied **11** et une paroi latérale de la chambre **5.** Cette paroi, étagée, est de révolution sensiblement autour d'un axe radial du moyeu **12** formant axe de référence de l'assemblage **10.** Après montage de la pale **1,** l'axe **B** se confond sensiblement avec cet axe radial. La chambre **5** débouche du côté du centre de l'hélice par un côté intérieur **12B** et du côté de la pale **1** par un côté extérieur **12A.**

Les figures 2, 3, 4, 5A, 5B, 5C, 6A, 6B, 7A, 7B, 7C, 8A, 8B, illustrent un mode de réalisation d'un assemblage **10** muni d'un roulement **20** pour guider en rotation une première bague **21** intérieure solidaire notamment d'un premier sous-ensemble **11** mécanique tel qu'un pied d'une pale d'une hélice à angle de calage variable, par rapport à une deuxième bague **22** extérieure solidaire de son support formé par un deuxième sous-ensemble **12** mécanique formant un moyeu tournant d'hélice.

Le pied **11** de la pale d'hélice vient se loger dans la chambre du moyeu **12** de sorte à être en liaison pivot avec lui. Le pied de la pale formant le premier sous-ensemble **11** mécanique est guidé en rotation par rapport au moyeu formant le deuxième sous-ensemble **12** de sorte à faire varier son angle de calage par deux roulements **20, 60,** respectivement un premier roulement **20** et un deuxième roulement **60** situés entre les premier et deuxième sous-ensembles **11, 12,** et étant espacés axialement l'un de l'autre.

Le premier roulement **20,** le plus éloigné de la pale et le plus proche de l'axe de révolution **A** est un roulement à billes **23** à contact oblique orienté de façon que son centre de poussée soit plus proche de l'axe de révolution de l'hélice que le roulement lui-même. Ce roulement **20** est situé au voisinage de l'extrémité du pied **11** de pale ou au voisinage du côté intérieur **12B** en position de roulement tandis que le deuxième roulement **60** est un roulement à rouleaux situé au voisinage du côté extérieur **12A,** en position de roulement de la pale par rapport au moyeu **12.**

Le roulement **20** comprend la première bague **21** présentant une première piste **211** de roulement et la deuxième bague **22** présentant une deuxième piste **221** de roulement.

La première bague **21** présente une première piste **211** de roulement et est solidaire du premier sous-ensemble **11.** La deuxième bague **22** présente une deuxième piste **221** de roulement et est solidaire du deuxième sous-ensemble **12.** Ces bagues peuvent être formées d'un seul tenant avec une autre pièce adjacente dans l'assemblage **10** ou bien être fixées à une autre pièce pour être intégrée au sous ensemble par solidarisation. Dans cet exemple, la deuxième bague **22** extérieure est frettée dans le moyeu **12** d'hélice et la première bague **21** intérieure est solidaire, du pied de pale, par exemple de façon amovibles pour des raisons de maintenance, et en appui contre un épaulement du pied de pale tourné à l'opposé de l'axe de révolution du moyeu d'hélice.

Sur les figures 2 et 3, l'intégralité du premier sous ensemble **11** n'est pas illustrée pour améliorer leur lisibilité, seules les première bagues **21, 61** intérieures des roulements **20, 60** étant illustrées.

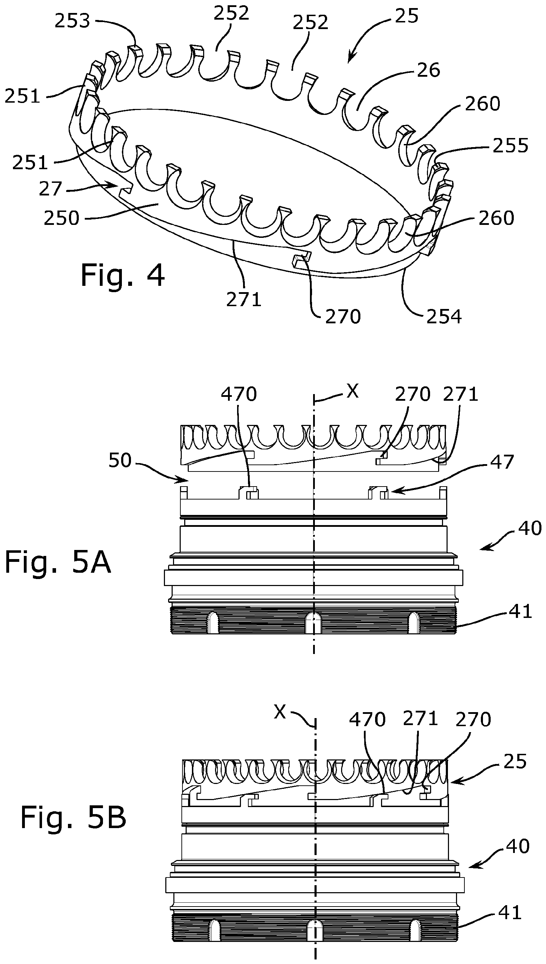

Le roulement **20** comprend des corps roulants **23,** ici des billes, configurées pour être positionnés dans un volume annulaire de roulement **24** entre la première et la deuxième pistes **211, 221** de roulement de manière à permettre une rotation relative entre la première bague **21** et la deuxième bague **22** autour d'un axe de référence **X** du roulement **20,** correspondant en position assemblée à l'axe **B** de rotation du pieds **11** de pale **1.** Pour maintenir les corps roulants **23** équidistants et les guider dans le mouvement de rotation, le roulement **20** est muni d'une cage **25** comprenant des alvéoles **26** de logement des corps roulants **23.** La cage **25** de roulement, illustrée en détail sur la figure 4 comprend une douille **250** annulaire configurée pour entourer au moins partiellement la première bague **21,** la cage **25** de roulement étant destinée à entourer ou encercler au moins partiellement la première bague **21** pour se placer radialement en regard de la première piste de roulement **211,** et notamment les alvéoles **26** de la cage sont destinées à entourer la première bague **21.** Dans cette configuration, la cage **25** est située radialement par rapport à l'axe de référence **X** entre la première bague **21** et la deuxième bague **22,** soit radialement entre le premier sous-ensemble **11** présentant la forme d'une extrémité d'arbre rotatif constitué par le pied de pale et son moyeu **12** formant support.

Des séparations **251** s'étendent axialement de ladite douille **250** en délimitant les alvéoles **26** de logement de corps roulants **23.** Ces séparations **251** permettent de conserver les corps roulants équidistants dans le volume ou l'espace annulaire **24** de roulement. De cette manière, tout contact ou choc entre deux corps roulants **23** voisins est totalement supprimé.

Pour garantir un encombrement minimum de la cage **25** de roulement dans l'espace annulaire **24** de roulement, des ouvertures **252** sont formées sur une face frontale **253** opposée à ladite douille **250** annulaire. Chaque alvéole **26** présente une surface de contact **260** configurée pour guider le corps roulant **23** qu'elle reçoit et être en contact direct avec lui le cas échéant, la surface de contact **260** s'étendant sur une portion d'enveloppe sphérique de sorte à présenter localement une forme complémentaire de la bille **23** que ladite alvéole **26** reçoit. La surface de contact **260** de chacune des alvéoles **26** s'étend continument entre deux séparations adjacentes **251** d'une même alvéole **26** en passant par la portion douille **250** qui les relie. Cette surface de contact **260** ici sous la forme de portion d'enveloppe sphérique est configurée pour s'étendre radialement vers l'intérieur du roulement **20** à partir du diamètre nominal de la bille **23** jusqu'à un diamètre inférieur audit diamètre nominal. De cette manière, la surface de contact **260** assure un enveloppement qui n'est pas susceptible de retenir une bille radialement vers l'extérieur. Une telle configuration permet d'améliorer la fonction de guidage des corps roulants **23** par la cage **25** et de ne pas entraver la course des corps roulants **23** lors de la procédure de maintenance visant à les sortir du roulement **20** par un canal d'accès **30** dédié.

Chaque alvéole **26** de logement d'un corps roulant **23** est configurée pour envelopper un corps roulant **23** de sorte à le maintenir axialement dans ladite alvéole **26.** Les billes ne peuvent donc pas s'échapper des alvéoles **26** axialement par les ouvertures **252.**

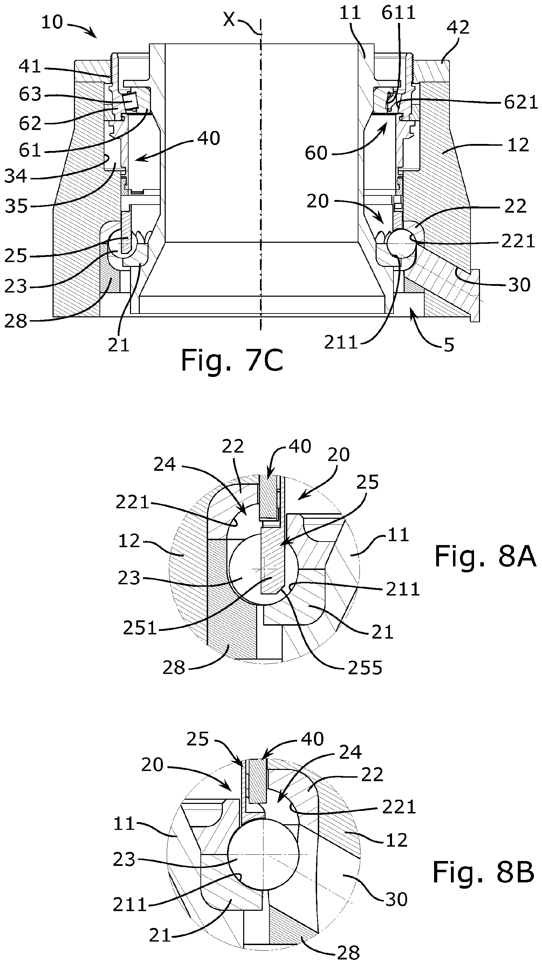

En position assemblée, le roulement **20** est positionné entre les premier et deuxième sous-ensembles **11, 12** portant les première et deuxième bagues **21, 22** respectivement, il en résulte un confinement dudit roulement **20** étant donné que ces premier et deuxième sous-ensembles **11, 12** ont un encombrement relativement important. Pour assurer l'accès aux corps roulants **23,** l'assemblage **10** comprend un canal d'accès **30** mettant en communication le milieu extérieur avec le volume annulaire de roulement **24.** Le canal d'accès **30** traverse le moyeu **12** et possède une section intérieure permettant le passage des corps roulants **23.** Lorsque l'hélice est en fonctionnement, ce canal d'accès **30** est généralement fermé par un bouchon de fermeture (voir la figure 7C).

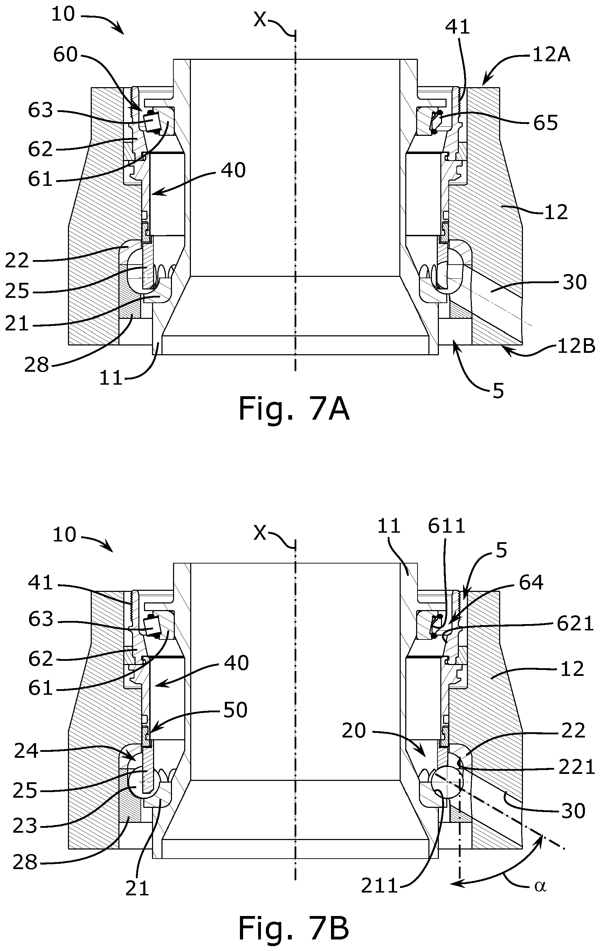

Le canal d'accès **30** est configuré pour traverser le deuxième sous-ensemble **12.** Ledit canal d'accès **30** débouche à une extrémité intérieure dans le volume annulaire de roulement **24** et à une extrémité extérieure, sur une surface extérieure de l'assemblage **10,** accessible pour un opérateur effectuant une opération de maintenance ou d'assemblage. Ce canal d'accès **30** est configuré de sorte à présenter une pente **α** par rapport à l'axe X, par exemple entre 50 et 70 degrés (voir la figure 7B), son extrémité extérieure étant décalée axialement vers le côté intérieure **12B** de l'assemblage par rapport à son extrémité intérieure. De cette manière un corps roulant **23** peut rouler dans ce canal d'accès **30** en étant entrainé par simple effet de sa gravité vers l'extérieur du volume **24** lorsque la pale est verticale, orientée vers le haut. Dit autrement, dans une position de maintenance verticale, lorsque le pied de pale **11** est au-dessus de l'axe de révolution du moyeu **12** de l'hélice et que l'axe de référence du pied de pale est dans un plan vertical, le canal d'accès **30** est ascendant depuis l'extérieur vers la chambre **5** du moyeu **12** d'hélice. Une cale annulaire **28** est présente dans le moyeu **12** d'hélice, par exemple en étant frettée audit moyeu **12** ou intégrée à ce moyeu **12,** et forme l'embouchure intérieure du canal d'accès **30.**

Les alvéoles **26** de la cage **25** sont par ailleurs dimensionnées de sorte que les corps roulants **23** peuvent s'échapper desdites alvéoles **26** sous leur propre poids quand les alvéoles **26** sont verticales ou assez proches de la verticale, les alvéoles **26** ne retenant pas elles-mêmes les corps roulants **23** radialement. De cette manière lorsqu'une bille **23** du roulement **20** est positionnée simplement en regard de l'extrémité intérieure du canal d'accès **30,** d'une part la cage **25** ne formera pas un obstacle au corps roulant **23** pour qu'il s'échappe vers le canal d'accès **30** et, d'autre part, le canal d'accès **30** pourra guider la bille **23** directement vers l'extérieur. Pour assurer le bon fonctionnement de ces opérations. L'assemblage **10** est positionné dans une certaine direction lors des opérations d'assemblage et de maintenance pour bénéficier de l'avantage de cette pente et de l'orientation des pièces compte tenu de l'effet gravitationnel sur la bille. En pratique, l'assemblage est positionné idéalement verticalement, c'est-à-dire que son axe de référence X est orienté parallèlement à un axe vertical, la pale de l'hélice étant dirigée vers le haut. On notera que dans cette configuration, l'assemblage pourrait également être orientée de sorte que son axe de référence X est orienté parallèlement à un axe horizontal.

L'assemblage **10** est configuré de sorte que la première bague **21** est mobile par rapport à la deuxième bague **22** entre une position de roulement des corps roulants **23** sur les première et deuxième pistes **211, 221** de roulement, et une position de maintenance ou d'assemblage dans laquelle la charge supportée par ces corps roulants **23** est supprimée.

Plus généralement, les première et deuxième bague **21, 22** du roulement à billes **20** étant chacune portée respectivement par le premier et le deuxième sous-ensemble **11, 12,** ledit premier sous-ensemble **11** formé par le pied de pale est déplaçable axialement par rapport au deuxième sous-ensemble **12,** le moyeu, de façon que la distance entre la première et la deuxième piste **211, 221** de roulement puisse être modifiée axialement. La position de roulement correspond à une position d'utilisation du roulement **20** dans laquelle les corps roulants **23** sont contraints, notamment au niveau de la précharge requise, entre leurs pistes **211, 221** de roulement et la position de maintenance ou d'assemblage correspond à une position dans laquelle la charge sur les corps roulants **23** est supprimée, permettant ainsi leur manipulation.

L'assemblage **10** comprend en outre un organe de manœuvre **40** présentant une double fonctionnalité : une première de ses fonctionnalités est de permettre, lors d'une étape d'assemblage, de maintenir au moins une partie du roulement **20** solidaire, et notamment la cage **25** de roulement, lors de l'insertion du pieds de pale ; une seconde de ses fonctionnalités est de participer au verrouillage axial de la première bague **21** par rapport à la deuxième bague **22,** et notamment du premier sous-ensemble **11** (le pied de pale) par rapport au deuxième sous-ensemble **12** (le moyeu), en position de roulement, cette mobilité axiale étant utile lors des opérations de maintenance et d'assemblage.

À cet effet, la cage **25** comprend une interface d'accouplement **27** avec l'organe de manœuvre **40** telle que lorsque l'organe de manœuvre **40** est en prise avec l'interface d'accouplement **27,** la cage **25** de roulement est apte à être entraînée par l'organe de manœuvre **40** en rotation dans une direction prédéterminée **D1** par rapport à l'axe de référence X. Cette direction **D1** détermine en pratique le sens de rotation de la cage **25** pour amener successivement chacune des billes **23** en regard du canal d'accès **30** pour procéder au retrait des corps roulants **23** durant une opération de maintenance visant à les remplacer, ou à l'inverse, à placer chacune des alvéoles **26** en regard du canal d'accès **30** en vue de recevoir une bille **23** insérée par le canal d'accès **30.**

L'interface d'accouplement **27** de la cage **25** de roulement forme avec des moyens d'accouplement **47** de l'organe de manœuvre **40** un mécanisme d'accouplement **50** amovible. Ce mécanisme **50** d'accouplement est amovible entre une position d'accouplement de la cage **25** de roulement avec l'organe de manœuvre **40** et une position désaccouplée. La position d'accouplement de la cage **25** de roulement avec l'organe de manœuvre **40** correspond à une position dans laquelle les moyens d'accouplement **47** de l'organe de manœuvre **40** sont en prise avec l'interface d'accouplement **27** de façon que le déplacement de l'organe de manœuvre **40** en rotation dans la direction prédéterminée **D1** par rapport à l'axe de référence X entraîne le déplacement de la cage **25** de roulement en rotation. Cet entraînement peut avoir pour fonctionnalité de conduire les corps roulants **23** vers le canal d'accès **30** d'où ils peuvent être retirés dans la position de maintenance lorsqu'il s'agit de les enlever ou peut être mis en œuvre pour pouvoir positionner chaque alvéole **26** de la cage **25** successivement en regard du canal d'accès **30** pour procéder à l'insertion des corps roulants **23** dans l'espace de roulement **24,** dans la position de maintenance lors d'une phase de maintenance ou lors du montage d'origine. La position désaccouplée de la cage **25** de roulement avec l'organe de manœuvre **40** permet quant à elle le déplacement axial de l'organe de manœuvre **40** dans une direction opposée à la cage **25** de roulement pour venir verrouiller axialement indirectement la première bague **21** par rapport à la deuxième bague **22** en position de roulement. Ce verrouillage est assuré directement par le blocage du premier sous-ensemble **11** formant pied de pale avec le deuxième sous-ensemble **12** formant moyeu.

A cet effet, l'organe de manœuvre **40** présente dispositif de fixation tel une portion filetée **41** configurée pour recevoir un flasque **42** (voir la figure 7C) de verrouillage, formant moyen de verrouillage, au travers d'un alésage taraudé, le flasque **42** de verrouillage étant maintenu en butée contre le deuxième sous-ensemble **12** en position de roulement pour verrouiller sa position axiale par rapport au deuxième sous-ensemble **12.**

Par ailleurs, l'organe de manœuvre **40** s'étend le long de l'arbre rotatif formant pied de pale **11** de sorte à être accessible de l'extérieur La portion filetée **41** équipe une extrémité distale de l'organe de manœuvre **40** orientée du côté extérieur **12A** de sorte à être toujours accessible de l'extérieure et de permettre à un opérateur de venir fixer le flasque **42** de verrouillage par vissage sur ladite portion filetée bloquant ainsi la position axiale du pied de pale **11** dans le moyeu **12** (voir la figure 7C).

Pour obtenir un mécanisme **50** d'accouplement amovible répondant au besoin de pouvoir manipuler la cage **25** de roulement via l'organe de manœuvre **40** grâce à une partie de cet organe de manœuvre **40** laissée accessible de l'extérieur de l'assemblage **10,** l'interface d'accouplement **27,** et en particulier sa douille **250,** est pourvue de rainures **270** réparties sur sa périphérie et configurées pour recevoir des pattes de crabotage **470** de l'organe de manœuvre **40** formant moyens d'accouplement **47.** Les rainures s'étendent circonférentiellement sur la douille **250,** ici sur son côté radialement extérieur par rapport à l'axe de référence X.

Des parois de guidage **271** sont prévues sur ladite douille **250** pour guider de façon continue le déplacement de chaque patte de crabotage **470** de l'organe de manœuvre **40** vers leur rainure **270** correspondante. Ces parois de guidage **271** sont dressées radialement par rapport à l'axe de référence X pour permettre un contact et un appui axial des pattes de crabotage **470** sur lesdites parois de guidage **271** lors de l'assemblage. Les parois de guidage **271** s'étendent sur la périphérie extérieure de la cage **25** de roulement en formant chacune une portion d'hélicoïde ou de spire autour de l'axe de référence X conduisant, à une extrémité de cette portion de spire, jusqu'à la rainure **270** correspondante. Dans cette configuration particulière, les pattes de crabotage **470** et les rainures **270** associées s'étendent de façon globalement parallèles à un plan perpendiculaire à l'axe de référence X, ceci permettant à la fois de retenir efficacement la position accouplée tout en garantissant que l'interface d'accouplement **27** amovible facilite le désengagement de la cage **25** et de l'organe de manœuvre **40.** De manière générale, les pattes de crabotage **470** et les rainures **270** doivent être axisymétriques et complémentaires deux à deux, ou du moins permettre une rotation relative entre elles.

Pour faciliter l'accouplement axial de l'organe de manœuvre **40** avec la cage **25,** la douille **250** est pourvue à une extrémité axiale **254,** opposée axialement à sa face frontale **253,** un profil de révolution configuré pour assurer le centrage de l'organe de manœuvre **40.** Ce profil de révolution est formé ici par une portion localement tronconique de la paroi extérieure de la douille **250** s'étendant axialement sur une portion située entre l'extrémité axiale **254** et les parois de guidage **271,** de préférence à son extrémité axiale **254,** tel un chanfrein (non illustré sur les figures). L'organe de manœuvre **40** présente un profil de révolution qui, en se rapprochant axialement de la cage **25** est autocentré par rapport à elle en étant guidé par cette paroi tronconique qu'elle enveloppe en venant se positionner coaxialement à l'axe de référence X de la cage **25.**

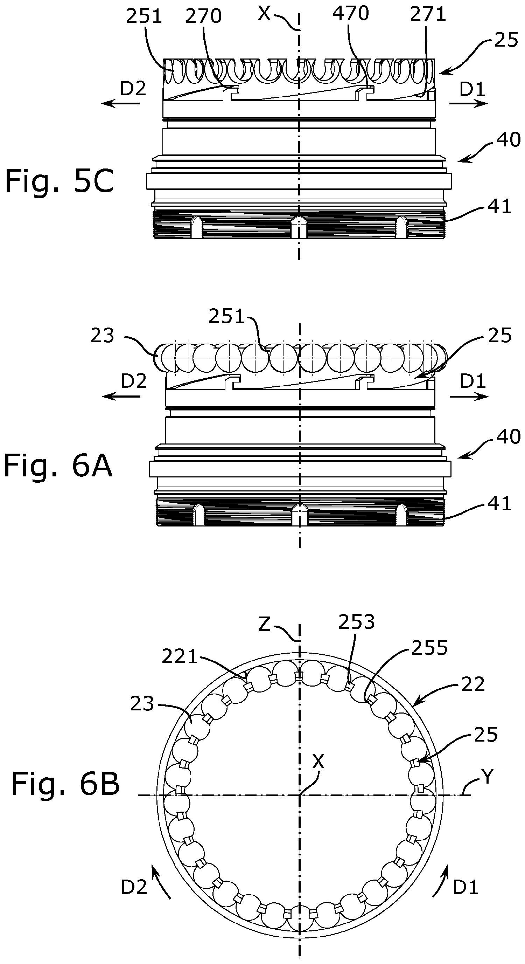

Un tel mécanisme **50** d'accouplement amovible est très simple d'utilisation en ce qu'il permet un engagement de l'organe de manœuvre **40** avec la cage **25** par un simple mouvement axial dans une direction de rapprochement des deux pièces combiné avec une rotation de l'organe de manœuvre **40** dans un sens prédéterminé **D1.** Les figures 5A, 5B et 5C illustrent des positionnements de la cage **25** de roulement et de l'organe de manœuvre **40** successivement en position désaccouplée puis dans une position intermédiaire entre la position désaccouplée et la position accouplée et enfin dans la position accouplée. Pour désaccoupler ou débrayer les deux pièces, il suffit de procéder simplement à une rotation de l'organe de manœuvre **40** par rapport à l'axe de référence X dans une direction inverse **D2** à la direction prédéterminée **D1** de rotation de la cage **25** de roulement.

En complément de ce premier roulement **20,** et dans le but d'assurer une meilleure répartition des efforts, le deuxième roulement **60** est situé entre les premier et deuxième sous-ensembles **11, 12,** le deuxième roulement **60** étant espacé axialement du premier roulement **20.**

Le roulement **60** le plus proche de la pale et le plus éloigné de l'axe de révolution de l'hélice est un roulement à rouleaux coniques **63,** orienté de façon que son centre de poussée soit plus éloigné de l'axe de révolution de l'hélice que le roulement lui-même. La première bague **61** intérieure de ce roulement **60** à rouleaux coniques est en appui axial contre un épaulement formé sur le pied de pale **11,** l'épaulement étant tourné vers l'axe de révolution du moyeu **12** d'hélice.

Le roulement **60** comprend cette première bague **61** intérieure qui présente une première piste **611** de roulement et une deuxième bague **62** extérieure présentant une deuxième piste **621** de roulement.

La première bague **61** est solidaire du premier sous-ensemble **11** et la deuxième bague **62** est ici une portion de l'organe de manœuvre **40.** Ce deuxième roulement **60** est donc interposé entre premier sous-ensemble **11** et l'organe de manœuvre **40.** De la même manière que le premier roulement **20,** ces bagues **61, 62** peuvent être formées d'un seul tenant avec une autre pièce adjacente dans l'assemblage **10** ou bien être fixées à une autre pièce. Dans ce mode de réalisation, la première bague **61** est rapportée sur le premier sous-ensemble **11** sous forme de deux demi-bagues **61A, 61B** complémentaires (visibles sur la figure 3) maintenues fixes entre elles tandis que la deuxième bague **62** est formée directement par une paroi de l'organe de manœuvre **40.**

Le roulement **60** comprend des corps roulants **63,** ici des rouleaux coniques, configurés pour être positionnés dans un volume annulaire de roulement **64** entre la première et la deuxième pistes **611, 621** de roulement de manière à permettre une rotation relative entre les première et deuxième bagues **61, 62** autour de l'axe du roulement **60** confondu avec l'axe de référence X du roulement **20.** Les rouleaux étant inclinés par rapport à l'axe de référence, les pistes **611, 621** de roulement du deuxième roulement **60** sont tronconiques par rapport à l'axe de référence X. Une chambre à volume variable **35** (voir la figure 7C) est délimitée d'une part, entre une jupe cylindrique **34** de la chambre **5** formée dans le moyeu d'hélice **12,** et d'autre part, l'organe de manœuvre **40,** qui peut être alimentée en fluide hydraulique pour actionner l'organe de manœuvre **40** à la manière d'un piston entre les positions de maintenance et de roulement. L'organe de manœuvre **40** constitue ainsi, avec la chambre à volume variable, un vérin hydraulique incorporé à l'assemblage **10** mécanique dans la chambre **5.**

D'autres caractéristiques et avantages de l'invention ressortiront à la lumière des différents procédés de montage, de démontage ou de maintenance qui seront décrits ci-après.

Pour assembler le pied de pale **11** dans son moyeu **12,** les étapes suivantes sont mises en œuvre.

Les premières bagues **21, 61** des premier et deuxième roulements **20, 60** sont fixées sur le pied de pale **11.** Elles sont chacune formées de deux demi-bagues hémicirculaires complémentaires reliées entre elles. Les rouleaux **63** sont positionnés sur la première piste **611** et maintenus ensemble par une cage **65.** La deuxième bague **22** du roulement **20** est quant à elle également fixée à l'intérieur de la chambre du moyeu **12** par frettage, un léger frettage étant suffisant, après avoir été introduite à l'intérieur du moyeu **12.** La cage **25** de roulement et l'organe de manœuvre **40** sont ensuite positionnés en position d'accouplement autour du premier sous-ensemble **11,** c'est-à-dire autour du pied de pale destiné à être logé dans le moyeu **12** de l'hélice. Dans cette position d'accouplement la cage **25** est positionnée coaxialement à la première bague **21** du roulement **20.**

Ce pré-assemblage est ensuite inséré axialement dans la chambre du moyeu qui le reçoit jusqu'à une position telle que les bagues **21, 22** définissent un volume annulaire **24** pouvant accueillir les corps roulants **23,** en particulier dans une position de maintenance du roulement **20.** Un volume annulaire de montage **24** est ainsi constitué entre les pistes **211, 221** de roulement, et délimité du côté intérieur **12B** par la cale annulaire **28.** La cage **25** pénètre dans ce volume annulaire **24.** Ce volume annulaire de montage correspond à un volume plus important que le volume annulaire de roulement du fait de la différence de distance entre les pistes **211, 221** de roulement entre les positions de maintenance et de roulement. Toutefois, les mêmes éléments délimitant ces deux espaces, la même référence **24** désigne ces deux espaces sur les figures.

Le canal d'accès **30** est ensuite ouvert de façon que les corps roulants **23** puissent le traverser de l'extérieur vers l'intérieur pour venir se positionner dans des alvéoles **26** délimitées au moins en partie par la cage **25** de roulement. L'opérateur accompagne la bille jusqu'à ce qu'elle soit logée dans l'alvéole associée **26** puis tourne la cage **25** venant écarter ladite bille **23** de son vis-à-vis avec le canal d'accès **30** de sorte que ladite bille **23** vient être maintenue par la cale annulaire **28** ensemble avec la deuxième piste **221** de roulement de la deuxième bague **22,** empêchant sa chute sous l'effet de la gravité. En d'autres termes, à chaque pas de rotation de la cage **25,** la bille **23** qui vient d'être insérée et toutes celles qui la précèdent tournent d'une fraction de tour sur la piste **211** de roulement de la première bague **21** intérieur et extérieurement sur la cale annulaire **28.**

Les figures 8A et 8B illustrent des détails du roulement **20** en coupe dans lequel est visible le volume annulaire **24** à l'intérieur duquel les billes **23** sont insérées. Une conséquence de la nécessité d'insérer axialement le pied de pale **11** avec la cage **25** et l'organe de manœuvre **40** est que les formes ne doivent pas faire obstacle à ce mouvement. Pour satisfaire à cette contrainte, un diamètre le plus grand de la bague intérieur **21** est configuré de sorte à être inférieur à un diamètre le plus petit de la bague extérieure **22.** Les première et deuxième bagues **21, 22,** et notamment leur piste associée **211, 221** peuvent s'étendre selon un secteur angulaire inférieure ou égale à 90°. La cale annulaire **28** permet de former avec la première bague **21** un berceau de soutien des billes **23** en position de maintenance du roulement **20** lors d'une phase de maintenance ou lors de leur montage/assemblage initial.

Dans cette position de maintenance, la cage **25** et l'organe de manœuvre **40** sont alignés axialement et forment un même ensemble embrayé ou solidarisé disposé coaxialement et radialement entre le pied **11** de la pale et la chambre du moyeu **12.** Par ailleurs, les bagues **21, 22** sont espacées axialement l'une de l'autre de sorte que la plus petite distance les séparant soit strictement supérieure au diamètre des billes **23** de sorte qu'une bille **23** logée dans ce volume **24** en position de maintenance ne supporte aucune charge. Cet espace entre les bagues **21, 22** est également suffisant pour pouvoir garantir le passage d'un corps roulant **23** entre les deux bagues **21, 22** pour leur insertion ou leur retrait. En effet, de cette manière, il n'est pas nécessaire de prévoir un canal d'accès débouchant directement sur la piste **221** de roulement. La conception et le dimensionnement d'un tel bouchon étant beaucoup plus complexes et onéreux compte tenu du fait qu'un tel bouchon doit être maintenu parfaitement affleurant avec la piste de roulement. Dans le mode de réalisation tel qu'illustré, il est aisé de s'affranchir simplement d'une telle contrainte.

Toujours dans cette position de maintenance, où la cage **25** de roulement est accouplée avec l'organe de manœuvre **40,** les pattes de crabotage **470** formant moyens d'accouplement **47** de l'organe de manœuvre **40** sont en prise avec les rainures **270** de l'interface d'accouplement **27** de façon que le déplacement de l'organe de manœuvre **40** en rotation dans la direction prédéterminée **D1** entraîne en rotation la cage **25** de roulement. Ainsi, la cage **25** de roulement peut être mise en rotation par un opérateur qui a accès à l'extrémité distale de l'organe de manœuvre **40** accessible de l'extérieure par une saillie axiale par rapport aux sous-ensembles **11, 12.** En pratique cette entraînement en rotation est effectué par une action d'un opérateur directement sur la pale, par exemple avec un outil adapté en fonction de la dimension de la pale, la rotation de la pale entraînant la rotation de l'anneau de billes. Cette mise en rotation manuelle permet de venir placer successivement chacune des alvéoles **26** en regard du canal d'accès **30,** par exemple pour y insérer une bille **23.**

Lorsque toutes les alvéoles **26** logent une bille **23,** la cage **25** de roulement est alors désengagée de l'organe de manœuvre **40** par une rotation de l'organe de manœuvre **40** par rapport à l'axe de référence X dans une direction **D2** inverse à la direction prédéterminée **D1** de rotation de la cage **25** de roulement, complétée par une translation axiale dans une direction d'éloignement par rapport à la cage **25.** Dans ce mouvement, l'extrémité distale de l'organe de manœuvre **40** sort de façon plus importante à l'extérieur de l'assemblage **10** ce qui permet d'avoir accès à la portion filetée **41** configurée pour recevoir un flasque **42** (voir la figure 7C) de verrouillage. Lorsque le flasque **42** est vissé sur ladite portion filetée **41,** le moyeu **12** se retrouve enserré axialement entre ledit flasque **42** et le pied de pale **11** bloquant leurs positions axiales relatives.

De manière sensiblement concomitante ou ultérieure à ce mouvement axial de l'organe de manœuvre **40** jusqu'à la position de verrouillage axial des deux sous-ensembles **11, 12** mécaniques, les bagues **21, 22** se sont rapprochées de sorte à placer le roulement **20** en position de roulement, les corps roulants **23** étant ainsi pré-chargés. Le roulement **60** est également pré-chargé en même temps que le premier roulement **20.** Durant le mouvement de translation de l'organe de manœuvre **40** de la position de maintenance à la position de roulement, le découplage est effectué de manière simultanée lorsque ladite translation est initiée, puis la mise sous précharge pourra être effectuée alors que la cage **25** de roulement sera complètement désaccouplée, ceci pour éviter d'arracher la cage **25** de roulement en reculant l'organe de manœuvre **40.**

On procède à ce rapprochement des pistes **211, 221** de roulement, en injectant un fluide hydraulique dans la chambre à volume variable, ce qui a pour effet de repousser axialement vers le haut la bague **62** à rouleaux coniques, qui entraîne dans son mouvement de translation le pied **11** de pale, et donc la ou les bagues intérieures **21** du roulement **20** à billes **23.** Le volume annulaire **24** se réduit progressivement jusqu'à prendre la dimension du logement annulaire de la figure 7C, lorsque les billes **23** entrent en contact avec la deuxième piste **221** de roulement extérieur. Le cas échéant, la pression hydraulique appliquée dans la chambre à volume variable permet une mise en charge des roulements antagonistes et une mise en tension du pied de pale.

Une fois la position de roulement atteinte et les roulements pré-chargés, l'opérateur peut procéder au verrouillage axial du premier sous-ensemble **11** mécanique par rapport au deuxième sous-ensemble **12** mécanique au moyen d'un écrou tel que le flasque **42** de verrouillage.

L'espace annulaire **24** de roulement étant particulièrement étroit, même pour une cage **25** de roulement, une distance minimale entre ladite cage **25** de roulement et les pistes **211, 221** doit être prévue par sécurité afin d'éviter tout risque de dégradation desdites pistes **211, 221** ou de la cage elle-même. Afin de garantir tout de même un bon enveloppement de chaque corps roulant en respectant ces contraintes d'encombrement, la face frontale **253** de la cage **25** comprend au moins un chanfrein **255,** situé de préférence à son extrémité radialement intérieure : ce chanfrein **255** garanti contre le risque de collision de la cage **25** de roulement avec la piste et permet en parallèle de positionner la face frontale **253** plus loin augmentant ainsi l'enveloppement et améliorant le guidage des billes **23.**

En position opérationnelle de roulement, la rotation du moyeu d'hélice **12** autour de son axe de révolution permet d'entraîner l'hélice et la pale. Un mécanisme de réglage de l'angle de calage de la pale, non illustré sur les figures permet de maintenir ou modifier, selon les besoins, l'angle de calage de la pale, en faisant tourner le pied de pale dans ses roulements **20, 60** de guidage autour de l'axe de référence X, et en bloquant le pied **11** de pale dans la position angulaire souhaitée.

Dans d'autres circonstances, l'assemblage **10** pourra être démonté ou les billes devront être remplacées ou inspectées. Pour démonter ou assurer la maintenance du pied de pale **11** dans son moyeu **12,** les étapes suivantes sont mises en œuvre, en procédant sensiblement de façon inverse.

Dans un premier temps, on positionne la chambre **5** ou cavité du moyeu **12** d'hélice de façon que son axe principal X soit vertical, avec l'orientation illustrée sur les figures, notamment les figures 7A, 7B et 7C.

Ensuite l'opérateur procède au déverrouillage axial du premier sous-ensemble **11** mécanique par rapport au deuxième sous-ensemble **12** mécanique en dévissant le flasque **42** de verrouillage de son ancrage sur le filetage **41,** ce qui a pour effet, en l'absence de pression dans la chambre à volume variable, de permettre au pied de pale **11** de se déplacer sous l'effet de son propre poids, et d'écarter l'une de l'autre les pistes **211, 221** de roulement opposées du roulement **20** à billes **23.** Pour éviter tout risque de chute de la pale lors du démontage ou tout effort excessif du personnel de maintenance, le dispositif hydraulique précédemment décrit pourra évidemment être employé pour supporter le poids de la pale durant le déplacement relatif des pistes **211** et **221.** En d'autres termes, le premier sous-ensemble **11** est déplacé axialement suivant l'axe de référence X par rapport au deuxième sous-ensemble **12** dans le sens d'un éloignement axial de la première bague **21** par rapport à la deuxième bague **22** du roulement **20.** Cet éloignement a pour conséquence de supprimer la charge sur les corps roulants **23.** La charge sur les corps roulants **63** est également supprimée en même temps.

En fin de course du déplacement précédent, l'organe de manœuvre **40** est déplacé vers la cage **25** de roulement en combinant translation suivant l'axe de référence X et une rotation autour de ce même axe X dans la direction **D1** jusqu'à venir s'engager sur son interface d'accouplement **27,** en position d'accouplement de sorte que le roulement **20** est en position de maintenance dans laquelle la charge sur les corps roulants **23** est supprimée. Le déplacement relatif axial du premier sous-ensemble **11** par rapport au deuxième sous-ensemble **12** et celui de l'organe de manœuvre **40** par rapport à la cage **25** de roulement, peuvent être en partie concomitant.

La cage **25** de roulement est ensuite déplacée en rotation dans le même sens prédéterminé **D1** autour de son axe de référence X pour conduire les corps roulants **23** vers le canal d'accès **30** d'où ils peuvent s'échapper du simple effet de leur poids et être retirés.

Durant toutes ces phases de maintenance et de roulement, la cage **25** assure sa fonction de guidage des corps roulants **23** évitant ainsi efficacement tout contact, choc ou usure entre les corps roulants **23.**

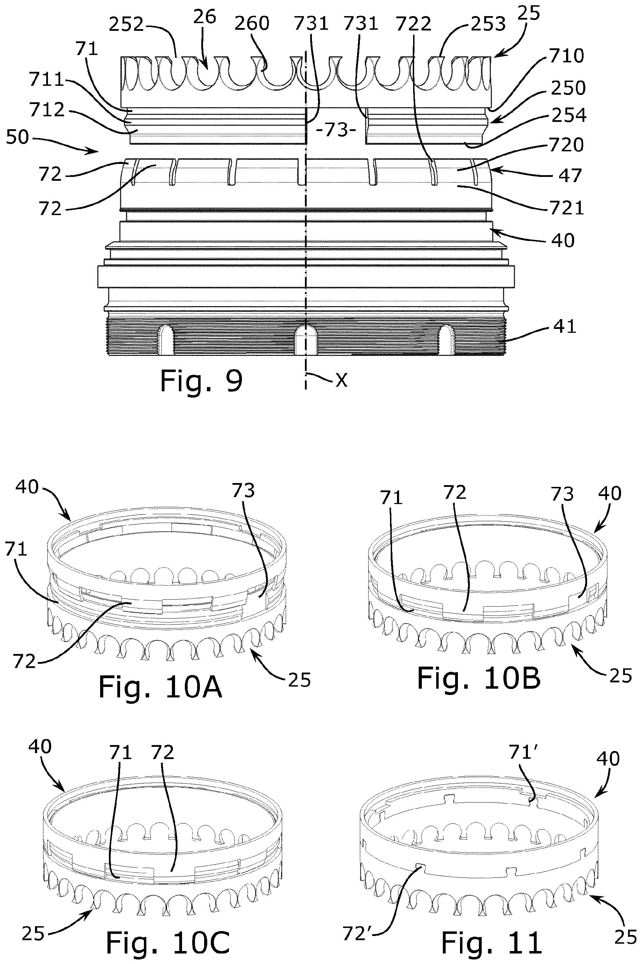

Les figures 9 à 17 illustrent des modes de réalisation différents, en particulier des variantes de réalisation du mécanisme d'accouplement **50.**

La variante de réalisation, illustrée sur les figures 9,10A, 10B, 10C, 12A, 12B et 12C, diffère essentiellement du mode de réalisation décrit ci-avant en ce que la cage **25** comprend au moins une rainure **71** configurée pour recevoir les moyens d'accouplement **47** de l'organe de manœuvre **40,** à savoir ici des crochets élastiques **72** aptes à venir s'accoupler de façon amovible, et par contrainte élastique, avec ladite rainure **71.**

Les crochets élastiques **72** sont répartis sur le pourtour de l'organe de manœuvre **40** et comportent chacun un corps **720** s'étendant globalement axialement, c'est-à-dire parallèlement à l'axe de référence **X,** à partir d'une base **721** solidaire d'une extrémité axiale de l'organe de manœuvre **40,** opposée axialement à sa portion filetée **41.** Chacun des crochets élastiques **72** est configuré pour s'accoupler, ou coopérer, avec la rainure **71.** Chacun des crochets élastiques **72** est articulé ou flexible élastiquement sensiblement au niveau de sa base **721,** par exemple à la jonction du corps **720** du crochet élastique **72** et de l'organe de manœuvre **40.** Chaque crochet élastique **72** est muni, à son extrémité distale opposée à sa base **721,** d'une tête de fixation **722** s'étendant au moins en partie radialement, et configurée pour venir se loger dans la rainure **71,** la tête de fixation **722** étant élastiquement contrainte dans ladite rainure **71** en position accouplée. Les crochets élastiques **72** s'étendent sur le pourtour annulaire de la cage **25** suivant des secteurs angulaires prédéterminés, délimitant la largeur des crochets, de sorte à conférer aux crochets élastiques **72** une certaine raideur.

La rainure **71** est portée par la douille **250** de la cage **25** et s'étend suivant une enveloppe annulaire par rapport à l'axe de référence **X,** de préférence circonférentielle par rapport à la cage **25,** et présente une ouverture **710** orientée radialement vers l'extérieur par rapport à l'axe de référence **X.** Un accouplement axial de l'organe de manœuvre **40** avec la cage **25** de roulement, c'est-à-dire un accouplement en translation est assuré par l'accrochage élastique des crochets élastiques **72** dans la ou les rainures **71** associée(s).

La rainure **71** est bordée, du côté axial qui reçoit en translation les crochets élastiques **72,** par une saillie **711** s'étendant suivant une enveloppe annulaire. Cette saillie **711** comporte, sur son côté extérieur opposé axialement au côté intérieur délimitant la rainure **71,** une paroi de guidage tel un chanfrein **712** permettant, lors de l'accouplage du mécanisme d'accouplement **50,** de guider les crochets élastiques **72** durant leur trajectoire d'accouplement, en plus de centrer l'organe de manœuvre **40** par rapport à la cage **25** durant cette opération, tout en assurant l'élargissement progressif des crochets élastiques **72,** c'est-à-dire leur déformation élastique, jusqu'à leur coopération dans la rainure **71.** De cette manière, la tête de fixation **722** à l'extrémité distale de chacun des crochets élastiques **72** est déplacée radialement et élastiquement sous l'effet de l'inflexion du crochet élastique **72** associée en glissant sur ledit chanfrein **712** pour venir se loger en bout de trajectoire dans la rainure **71** et assurer la fonction d'accrochage élastique ou clipsage axial. La saillie **711** forme ainsi un cran d'arrêt à la position accouplée des deux pièces, lorsque les crochet élastique **72** sont logés dans la rainure **71** pour éviter son désaccouplement intempestif, le désaccouplement pouvant toutefois être possible en exerçant une contrainte suffisante prédéterminée, notamment au moins égale à l'effort de clipsage, en translation dans le sens de l'éloignement des deux pièces. La rainure **71** présente un fond s'étendant suivant une enveloppe continue sur sa circonférence, et dont chaque section est identique à toutes les autres, de sorte qu'une fois accouplée en translation avec la cage **25,** après le mouvement de translation effectué, l'organe de manœuvre **40** peut être pivoté.

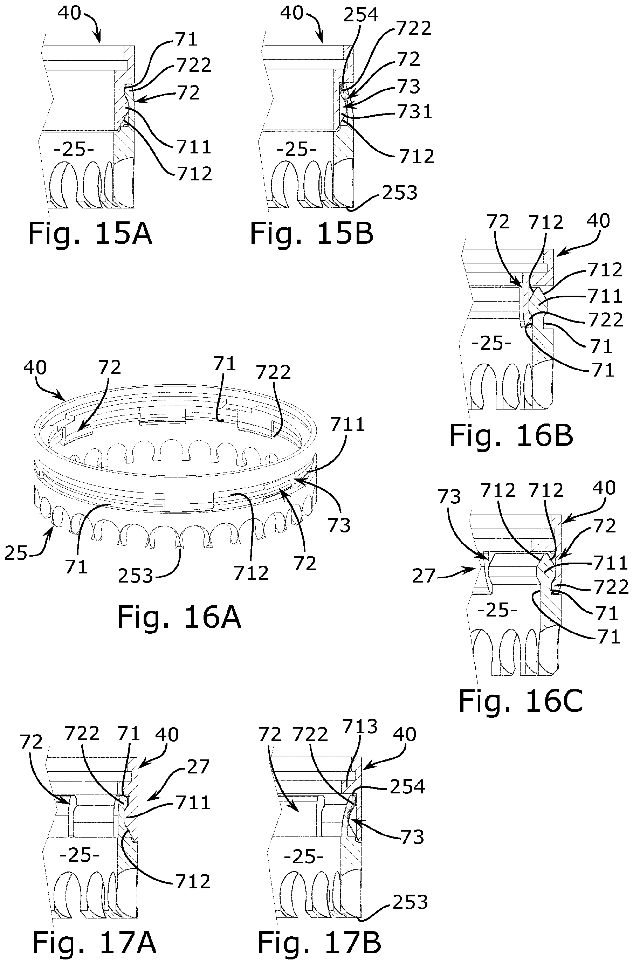

Pour limiter la translation axiale relative de l'organe de manœuvre **40** par rapport à la cage **25,** tout ou partie des crochets élastiques comprennent, par exemple au niveau de leur corps, une protubérance **723** orientée du côté de la pièce avec laquelle elles s'accouplent, soit ici vers l'intérieur, et qui sont configurées pour former une butée axiale apte à recevoir axialement en butée la saillie **711.** Une telle butée peut présenter différentes configurations : par exemple la protubérance axiale **723** peut être solidaire de l'organe de manœuvre **40** et configurée pour recevoir en butée une extrémité axiale **254** de la pièce portant la rainure **71,** comme la cage **25** ou une autre protubérance **713** peut border la rainure **71,** de l'autre côté axialement de la saillie **711** et configurée pour recevoir en butée axiale une extrémité axiale des crochets élastiques **72** (voir par exemple la figure 17A). Bien entendu, d'autres surfaces peuvent tout à fait être utilisées pour former une telle butée axiale relative entre les deux pièces.

Un accouplement angulaire de l'organe de manœuvre **40** avec la cage **25** de roulement, c'est-à-dire un accouplement en rotation, est assuré par l'accrochage élastique d'au moins un crochet élastique **72** dans un évidement **73** correspondant. L'évidement **73** est ouvert radialement du même côté, ici extérieur, que la rainure **71** et est configuré de sorte que, lorsqu'un crochet élastique **72** est placé en regard radialement de l'évidement **73,** ledit crochet élastique peut revenir dans sa position de repos, sans déformation, pour venir pénétrer dans cet évidement **73** et lier en rotation la cage **25** à l'organe de manœuvre **40,** à la manière d'une clavette. L'évidement **73** s'étend suivant un secteur angulaire supérieur à un secteur angulaire de l'un des crochets élastiques **72.** De cette manière, la largeur d'un crochet élastique **72** étant plus faible que la largeur de l'évidement **73,** celui-ci peut s'y loger. Le secteur angulaire de l'évidement **73** est délimité par deux bords latéraux **731** contenus chacun sensiblement dans des plans contenant l'axe de référence **X.** L'évidement **73** correspond au moins à une discontinuité locale dans la saillie **711,** mais peut s'étendre de façon plus ou moins conséquente sur tout ou partie de la section de la douille **250,** de sorte que les bords latéraux **731** angulaires de l'évidement **73** correspondent chacune au moins à une tranche de cette saillie **711** jusqu'à l'intégralité de la section de la douille **250.** En position accouplée, chaque crochet élastique **72** est en appui contre la rainure **71,** cet appui pouvant être localisé au niveau des têtes de fixation **722** contre le fond de la rainure associée et/ou au niveau du corps **720** du crochet élastique **72** contre la saillie **711.** L'évidement **73** est configuré de sorte qu'au moins un crochet élastique **72** peut s'y loger dans un état de contrainte élastique plus faible que dans la rainure **71.** De cette manière, après une rotation relative de l'organe de manœuvre **40** par rapport à la cage **25,** un crochet élastique **72** vient se positionner en regard de l'évidement **73,** sa contrainte élastique se relâche et permet la pénétration du crochet élastique **72** entre les deux bords latéraux **731** qui le délimite. En effectuant le mouvement de rotation relative de l'organe de manœuvre **40** par rapport à la cage **25,** le crochet vient contre le bord latéral **731** placé sur son chemin et entraîne en rotation la cage **25.**

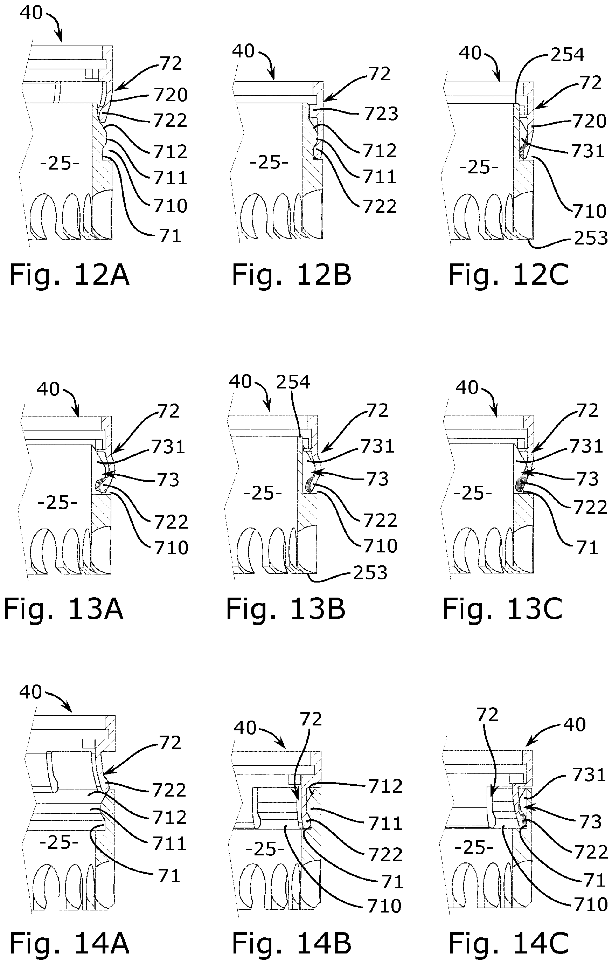

De manière complémentaire ou alternative, l'évidement **73** peut présenter localement une profondeur radiale supérieure à une profondeur radiale de la rainure **71,** jusqu'à être traversant dans l'épaississeur de la pièce (voir par exemple les modes de réalisation des figures 13A, 13B et 13C, et 16A, 16B et 16C).

Une fois accouplé en translation avec la cage **25,** l'organe de manœuvre **40** peut alors être pivoté jusqu'à ce que l'un des crochets élastiques **72** adapté pénètre par retour élastique dans l'évidement **73** où une tranche du crochet élastique **72** associée vient en butée latéralement contre l'un des bords latéraux **731** de l'évidement **73.** L'évidement **73** accueillant le crochet élastique **72** dit « antirotation » est ainsi occupé suite à une simple rotation d'au plus une largeur de crochet **72** de l'organe de manœuvre **40,** ceci sous le simple effet du retour à la position non déformée dudit crochet, ou dans une position a minima de moindre déformation correspondant à une position de moindre contrainte par rapport à la contrainte dans la rainure **71.**

De cette manière, la cage **25** de roulement est apte à être entraînée par l'organe de manœuvre **40** en rotation dans une direction prédéterminée par rapport à l'axe de référence **X.** Une rotation dans l'autre sens va venir, éventuellement après une course correspondant à un certain jeu fonction des dimensions, faire venir le crochet élastique **72** antirotation en contact et en butée contre l'autre des bords latéraux **731** de l'évidement **73** de sorte que la cage **25** de roulement est apte à être entraînée par l'organe de manœuvre **40** en rotation dans une direction inverse par rapport à l'axe de référence **X.**

On notera que la zone de déformabilité de chacun des crochets élastiques 72 peut être formée par une extrusion circulaire de son profile avec ou sans évidement. La forme et le dimensionnement de chacun des crochets élastiques **72** permettent de privilégier une zone de déformabilité élastique desdits crochets élastiques **72.**

Pour désaccoupler ou séparer les deux pièces, il suffit de procéder simplement à une translation axiale de l'organe de manœuvre **40,** par rapport à l'axe de référence **X,** c'est-à-dire un simple mouvement dans une direction d'éloignement des deux pièces. Pour assurer ce caractère amovible de l'accouplement, la saillie **711** peut, par exemple, être bordée, du côté intérieur à la saillie **711,** soit du côté opposé à la paroi de guidage **712,** par une autre paroi inclinée configurée de sorte à guider les crochets élastiques **72** durant leur trajectoire de désaccouplement en assurant l'élargissement progressif des crochets élastiques **72** lorsqu'un effort prédéterminé est appliqué sur l'organe de manœuvre **40** tendant à éloigner les deux pièces **25, 40.** L'inclinaison de cette paroi est choisie de sorte à être suffisamment importante pour ne pas risquer un désaccouplement intempestif des deux pièces, mais suffisamment réduit pour permettre le désaccouplement des deux pièces à partir d'un effort prédéterminé, de préférence de sorte qu'une action manuelle d'un opérateur puisse venir désaccoupler les deux pièces sans nécessiter l'utilisation d'un outillage spécifique. On notera que la fonction réalisée par la saillie **711** peut présenter une structure différente. Par exemple, on peut utiliser des têtes de fixation **722** des crochets élastiques **72** configurées, notamment par leur forme, pour venir se clipser sur un épaulement, l'accouplement étant configuré par exemple pour garantir que l'effort de « déclipsage » soit supérieur à l'effort de clipsage.

La figure 11 illustre une vue en perspective d'une cage **25** de roulement selon un autre mode de réalisation, en position accouplée en translation, et en rotation, de l'organe de manœuvre **40** avec la cage **25.** Ce mode de réalisation diffère essentiellement du précédent en ce que des saillies **72'** axiales de la cage **25** sont configurées pour venir coopérer par déformation élastique dans des logements **71'** formés dans l'épaisseur de l'organe de manœuvre **40** et configurées pour former ensemble mécanisme d'accouplement **50.** L'ouverture des logements **71'** pour recevoir les saillies **72'** est ouverte axialement par rapport à l'axe de référence **X.** Pour assurer cette coopération par déformation élastique, les saillies **72'** axiales de la cage **25** présentent des bourrelets ou renflements latéraux, lesquels sont orientés selon l'épaisseur de la douille **250,** sensiblement dans une direction perpendiculaire à des plans contenant l'axe de référence **X.**

Les variantes illustrées sur les figures 13A, 13B et 13C se rapportent à des modes de réalisation différents où sont visibles des crochets élastiques **72** antirotation dans un évidement **73** associé, les crochets élastiques **72** présentant des formes et dimensions qui diffèrent pour chacune d'elles. Ainsi par exemple, le crochet élastique **72** peut présenter une forme sensiblement courbe, voir avec une zone coudée pour une meilleure maîtrise de l'effort de pression comme illustré sur les figures 13A et 13B, ou inversement être plus inclinées vers l'intérieur pour augmenter le recouvrement de la section du crochet élastique avec les faces **731** comme illustré sur la figure 13C.

De manière générale, on notera que la forme des crochets élastiques **72** est conçue pour permettre :
- un effort de clipsage suffisant pour les opérations de montage et/ou de maintenance ;
- un effort de déclipsage sans détérioration du crochet élastique **72** sous l'effet du retrait du la cage **25** de roulement ; et
- une résistance suffisante pour entraîner la cage **25** de roulement et son anneau de billes **23** dans la configuration où l'effort s'opposant à la rotation souhaitée est le plus élevé, ceci en tenant compte d'un éventuel coefficient de sécurité.

Les figures 14A, 14B et 14C illustrent un détail, vue en coupe, d'une cage **25** de roulement et d'un organe de manœuvre **40** selon un autre mode de réalisation, respectivement en position désaccouplée (figure 14A), accouplée en translation (figure 14B) et accouplée en translation et en rotation (figure 14C).

Ce mode de réalisation diffère essentiellement des précédents modes de réalisations décrits en ce que les crochets élastiques **72** présentent une tête de fixation **722** s'étendant radialement vers l'extérieur, et configurée pour venir se loger dans la rainure **71** dont l'ouverture **710** est orientée vers l'intérieur. Comme la rainure **71,** la saillie **711** est saillante vers l'intérieur. De cette manière, les crochets élastiques **72** de l'organe de manœuvre **40** viennent donc glisser dans l'espace radialement intérieur de la douille **250.** L'accouplement des crochets élastiques **72** dans la rainure permet un clipsage intérieur.

Le mode de réalisation illustré sur les figures 15A et 15B, représente une variante de réalisation qui diffère essentiellement des modes de réalisations décrits précédemment, en ce que les crochets élastiques **72** du mécanisme d'accouplement **50** sont solidaires de la cage **25** et la rainure **71** et solidaire de l'organe de manœuvre **40.**

Le mode de réalisation illustré sur les figures 16A, 16B et 16C, représente une variante de réalisation qui diffère essentiellement des modes de réalisations décrits précédemment, en ce que le mécanisme d'accouplement **50** comporte des crochets élastiques **72** intérieurs et extérieurs, de manière alternée sur le pourtour de sorte à venir assurer un accouplement desdits crochets élastiques **72** intérieures et extérieures respectivement dans une rainure intérieure et une rainure extérieure de la douille **250.** De cette manière, les crochets élastiques **72** viennent se clipser alternativement par l'intérieur puis par l'extérieure. L'évidement **73** est ici traversant radialement la paroi de la cage **25** de roulement de sorte que le couplage en rotation peut être effectué sans distinction par l'un des crochets élastiques **72** intérieur ou extérieur.

Le mode de réalisation illustré sur les figures 17A et 17B, représente une variante qui diffère essentiellement du mode de réalisation décrit en référence aux figures 15A et 15B, en ce que l'accouplement des crochets élastiques **72** dans la rainure permet un clipsage par l'intérieur.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Par exemple, le mécanisme d'accouplement **50** formé dans les premiers modes de réalisation décrits par la coopération des moyens d'accouplement **47** de l'organe de manœuvre **40** comprenant des pattes de crabotage **470,** avec l'interface d'accouplement **27** comprenant les rainures **270** de la cage **25** de roulement, peuvent présenter des structures différentes pour assurer la même fonction. Des moyens d'accouplement ferromagnétiques peuvent par exemple être également utilisés en remplacement ou en complément. D'autres moyens d'accouplement selon un mode de réalisation peuvent également comprendre des cannelures. Dans ces deux cas, l'accouplement des moyens d'accouplement **47** de l'organe de manœuvre **40** avec l'interface d'accouplement **27** de la cage **25** peut être effectué par une simple translation suivant l'axe de référence X.

Le chanfrein **712** permettant, lors de l'accouplage du mécanisme d'accouplement **50** pour faciliter l'accrochage élastique en formant des surfaces de guidage des crochets élastiques, peut présenter une autre forme comme par exemple une surface d'un rayon de raccord de profil circulaire ou elliptique par exemple.

Le vérin hydraulique constitué par l'organe de manœuvre formant piston et la chambre à volume variable constituée dans la chambre étagée **5** du moyeu d'hélice **12** peut être le cas échéant remplacé par tout autre type d'actionneur, dont la source d'énergie peut être hydraulique, pneumatique ou électrique, par exemple un actionneur à motorisé à vis sans fin.

## Revendications

1. Cage (25) de roulement (20) pour un roulement du type comprenant une première bague (21) présentant une première piste (211) de roulement, une deuxième bague (22) présentant une deuxième piste (221) de roulement, des corps roulants (23) positionnés dans un volume annulaire de roulement (24) entre la première et la deuxième piste (211, 221) de roulement de manière à permettre une rotation relative entre les première et deuxième bagues (21, 22) autour d'un axe de référence (X) du roulement (20), la cage (25) comportant des alvéoles (26) de logement des corps roulants (23) et comprenant une interface d'accouplement (27) avec un organe de manœuvre (40), telle que lorsque l'organe de manœuvre (40) est en prise avec l'interface d'accouplement (27), la cage (25) de roulement est apte à être entraînée par l'organe de manœuvre (40) en rotation dans une direction prédéterminée (D1) par rapport à l'axe de référence (X), la cage étant **caractérisée en ce que** l'interface d'accouplement (27) avec l'organe de manœuvre (40) est configurée pour assurer un accouplement amovible.

2. Cage (25) de roulement selon la revendication 1, **caractérisée en ce que** l'interface d'accouplement (27) avec l'organe de manœuvre (40) est configurée pour assurer un accouplement amovible par accrochage élastique.

3. Cage (25) de roulement selon la revendication 1 ou 2, **caractérisée en ce que** chaque alvéole (26) de logement d'un corps roulant (23) est configurée pour envelopper un corps roulant (23) de sorte à le maintenir axialement dans ladite alvéole (26) et assurer le maintien de la cage (25) dans la position requise de roulement durant les phases de fonctionnement.

4. Cage (25) de roulement selon l'une quelconque des revendications précédentes, **caractérisée en ce que** les alvéoles (26) de logement des corps roulants (23) sont dimensionnées de sorte que les corps roulants (23) peuvent s'échapper desdites alvéoles (26) sous l'effet de leur propre poids, les alvéoles (26) ne retenant pas les corps roulants (23) radialement au moins selon une direction radiale et un sens allant de l'axe X vers l'extérieur de la cage (25).

5. Cage (25) de roulement selon l'une quelconque des revendications précédentes, **caractérisée en ce qu'**elle comprend une douille (250) annulaire à partir de laquelle s'étendent axialement des séparations (251) délimitant les alvéoles (26) de logement de corps roulants (23), et **en ce qu'**elle présente des ouvertures (252) formées sur la face frontale (253) opposée à ladite douille (250) annulaire.

6. Cage (25) de roulement selon la revendication 5, **caractérisée en ce que** la douille (250) présente une extrémité axiale (254), axialement opposée à sa face frontale (253), comprenant un profil de révolution configuré pour assurer le centrage de l'organe de manœuvre (40).

7. Cage (25) de roulement selon l'une quelconque des revendications précédentes, **caractérisée en ce que** chaque alvéole (26) présente une surface de contact (260) configurée pour être localement complémentaire de celle du corps roulant (23) qu'elle reçoit, la surface de contact (260) pouvant notamment s'étendre sur une portion d'enveloppe sphérique.

8. Cage (25) de roulement selon l'une quelconque des revendications précédentes, **caractérisée en ce que** l'interface d'accouplement (27) comprend au moins une première parmi deux interfaces d'accouplement constituées l'une par des crochets élastiques (72) et l'autre par au moins une rainure (71), la première des deux interfaces d'accouplement étant configurée pour venir en prise, de préférence pour coopérer par accrochage élastique avec une deuxième des deux interfaces d'accouplement (72, 71) portée par l'organe de manœuvre (40).

9. Cage (25) de roulement selon la revendication 8 dépendant au moins de la revendication 6, **caractérisée en ce que** la rainure (71) est bordée du côté recevant les crochets élastiques lors de l'accouplement, par une saillie (711) radiale, la saillie (711) comportant une paroi de guidage (712) pour guider les crochets élastiques (72) durant leur trajectoire d'accouplement, la paroi de guidage (712) étant de préférence configurée pour guider l'organe de manœuvre (40) vers une position centrée par rapport à la cage (25).

10. Cage (25) de roulement selon l'une quelconque des revendications précédentes, **caractérisée en ce que** la face frontale (253) de la cage (25) comprend au moins un chanfrein (255), situé de préférence radialement à l'intérieur.

11. Roulement (20) comprenant une première bague (21) présentant une première piste (211) de roulement, une deuxième bague (22) présentant une deuxième piste (221) de roulement, des corps roulants (23) positionnés dans un volume annulaire de roulement (24) entre la première et la deuxième pistes (211, 221) de roulement de manière à permettre une rotation relative entre les première et deuxième bagues (21, 22) autour d'un axe de référence (X) du roulement (20), la première bague (21) étant mobile par rapport à la deuxième bague (22), notamment axialement, entre une position de roulement des corps roulants (23) sur les première et deuxième pistes (211, 221) de roulement et une position de maintenance dans laquelle la charge supportée par ces corps roulants (23) est supprimée, le roulement (20) étant **caractérisé en ce qu'**il comporte une cage (25) de roulement selon l'une quelconque des revendications 1 à 10.

12. Roulement (20) selon la revendication 11, **caractérisé en ce que** les corps roulants (23) sont des billes.

13. Assemblage (10) d'un premier sous-ensemble (11) mécanique avec un deuxième sous-ensemble (12) mécanique, l'assemblage comprenant un roulement (20) comprenant une première bague (21) présentant une première piste (211) de roulement, une deuxième bague (22) présentant une deuxième piste (221) de roulement, la première bague (21) étant solidaire du premier sous-ensemble (11) et la deuxième bague (22) étant solidaire du deuxième sous-ensemble (12), des corps roulants (23) positionnés dans un volume annulaire de roulement (24) entre la première et la deuxième pistes (211, 221) de roulement de manière à permettre une rotation relative entre les première et deuxième bagues (21, 22) autour d'un axe de référence (X) du roulement, et un canal d'accès (30) mettant en communication le milieu extérieur avec le volume annulaire de roulement (24), le canal d'accès (30) ayant une section intérieure permettant au moins le passage des corps roulants (23), la première bague (21) étant mobile par rapport à la deuxième bague (22) entre une position de roulement des corps roulants (23) sur les première et deuxième pistes (211, 221) de roulement et une position de maintenance dans laquelle la charge supportée par ces corps roulants (23) est supprimée, le roulement (20) comportant une cage (25) comportant des alvéoles (26) de logement des corps roulants (23), l'assemblage (10) étant **caractérisé en ce que** la cage (25) comprend une interface d'accouplement (27) avec un organe de manœuvre (40), telle que lorsque l'organe de manœuvre (40) est en prise avec l'interface d'accouplement (27), la cage de roulement (25) est apte à être entraînée par l'organe de manœuvre (40) en rotation dans une direction prédéterminée (D1) par rapport à l'axe de référence (X).

14. Assemblage (10) selon la revendication 13, **caractérisé en ce que** le premier sous-ensemble (11) est déplaçable axialement par rapport au deuxième sous-ensemble (12) de façon que la distance entre la première et la deuxième piste (211, 221) de roulement puisse être modifiée.

15. Assemblage (10) selon la revendication 13 ou 14, **caractérisé en ce que** l'organe de manœuvre (40) est configuré pour participer au verrouillage axial du premier sous-ensemble (11) par rapport deuxième sous-ensemble (12), notamment de la première bague (21) par rapport à la deuxième bague (22), en position de roulement.

16. Assemblage (10) selon l'une quelconque des revendications 13 à 15, **caractérisé en ce que** la cage (25) de roulement et l'organe de manœuvre (40) comprennent un mécanisme d'accouplement (50) amovible entre une position d'accouplement de la cage (25) de roulement avec l'organe de manœuvre (40) dans laquelle des moyens d'accouplement (47) de l'organe de manœuvre (40) sont en prise avec l'interface d'accouplement (27) de la cage (25) de façon que le déplacement de l'organe de manœuvre (40) en rotation dans la direction prédéterminée (D1) par rapport à l'axe de référence (X) entraîne le déplacement de la cage de roulement, et une position désaccouplée permettant le déplacement de l'organe de manœuvre (40) pour verrouiller axialement la première bague (21) par rapport à la deuxième bague (22) en position de roulement.

17. Assemblage (10) selon l'une quelconque des revendications 13 à 16, **caractérisé en ce que** le mécanisme d'accouplement (50) amovible de la cage (25) de roulement avec l'organe de manœuvre (40) comprend des crochets élastiques (72) formant une interface d'accouplement (27) et configurés pour venir en prise sous contrainte élastique dans au moins une rainure (71) formant une interface d'accouplement complémentaire.

18. Assemblage (10) selon l'une quelconque des revendications 13 à 17, **caractérisé en ce que** l'organe de manœuvre (40) s'étend le long du premier sous-ensemble (11) de sorte à être accessible de l'extérieur.

19. Assemblage (10) selon l'une quelconque des revendications 13 à 18, **caractérisé en ce que** l'organe de manœuvre (40) présente un dispositif de fixation, notamment une portion filetée (41), configuré pour recevoir un moyen de verrouillage, notamment un flasque (42) de verrouillage, au travers d'un alésage taraudé, le moyen de verrouillage étant maintenu en butée contre le deuxième sous-ensemble (12) en position de roulement pour verrouiller sa position axiale par rapport au deuxième sous-ensemble (12).

20. Assemblage (10) selon l'une quelconque des revendications 13 à 19, **caractérisé en ce que** le premier sous-ensemble (11) mécanique est un arbre rotatif, par exemple un pied de pale d'une hélice à angle de calage variable, dont une première extrémité est supportée en position de roulement par le deuxième sous-ensemble (12) mécanique tel qu'un moyeu tournant de l'hélice.

21. Procédé de montage d'un assemblage (10) selon l'une quelconque des revendications 13 à 20, le procédé de montage étant **caractérisé en ce qu'**il comprend les étapes suivantes :
- mise en place de la cage (25) de roulement en position d'accouplement avec l'organe de manœuvre (40) autour du premier sous-ensemble (11) ;
- mise en place de l'ensemble formé par le premier sous-ensemble (11), la cage (25) de roulement et l'organe de manœuvre (40) par rapport au deuxième sous-ensemble (12), le roulement (20) étant placé en position de maintenance ;
- ouverture du canal d'accès (30) de façon que les corps roulants (23) puissent le traverser pour soit venir se positionner soit être positionnés dans des alvéoles (26) délimitées au moins en partie par la cage (25) de roulement, en combinaison avec la rotation de la cage dans le sens (D1) ;
- désengagement de la cage (25) de roulement et de l'organe de manœuvre (40), déplacement de l'organe de manœuvre (40) , et déplacement relatif du premier sous-ensemble (11) par rapport au deuxième sous-ensemble (12), jusqu'à la position de roulement de l'assemblage (10);
- verrouillage axial du premier sous-ensemble (11) mécanique par rapport au deuxième sous-ensemble (12) mécanique, dans la position de roulement.

22. Procédé de démontage ou de maintenance d'un assemblage (10) selon l'une quelconque des revendications 13 à 20 le procédé de démontage ou de maintenance étant **caractérisé en ce qu'**il comprend les étapes suivantes :
- déverrouillage axial du premier sous-ensemble (11) mécanique par rapport au deuxième sous-ensemble (12) mécanique ;
- déplacement de l'organe de manœuvre (40) vers la cage (25) de roulement pour venir s'engager sur son interface d'accouplement (27), en position d'accouplement de sorte que le roulement (20) est amené en position de maintenance ;
- déplacement en rotation de la cage (25) de roulement dans un sens prédéterminé (D1) autour de son axe de référence (X) pour conduire les corps roulants (23) vers le canal d'accès (30) permettant soit leur retrait par une action appropriée, soit leur sortie sous l'effet de la gravité.

## Patentansprüche

1. Lagerkäfig (25) für Wälzlager (20) von der Art, dass er einen eine erste Lagerbahn (211) aufweisenden ersten Ring (21), einen eine zweite Lagerbahn (221) aufweisenden zweiten Ring (22), Wälzkörper (23), die in einem ringförmigen Volumen des Wälzlagers (24) zwischen der ersten und der zweiten Lagerbahn (211, 221) derart positioniert sind, dass sie eine Drehung des ersten und des zweiten Rings (21, 22) relativ zueinander um eine Referenzachse (X) des Wälzlagers (20) ermöglichen, umfasst, wobei der Käfig (25) Aussparungen (26) zur Aufnahme der Wälzkörper (23) aufweist und eine Kupplungsschnittstelle (27) mit einem Funktionselement (40) umfasst, so dass, wenn das Funktionselement (40) mit der Kupplungsschnittstelle (27) in Eingriff ist, der Lagerkäfig (25) durch das Funktionselement (40) in eine vorbestimmte Richtung (D1) bezüglich der Referenzachse (X) drehend mitnehmbar ist, wobei der Käfig **dadurch gekennzeichnet ist, dass** die Kupplungsschnittstelle (27) mit dem Funktionselement (40) so ausgebildet ist, dass eine umsetzbare Kupplung bereitgestellt wird.

2. Lagerkäfig (25) nach Anspruch 1, **dadurch gekennzeichnet, dass** die Kupplungsschnittstelle (27) mit dem Funktionselement (40) so ausgebildet ist, dass durch federndes Verhaken eine umsetzbare Kupplung bereitgestellt wird.

3. Lagerkäfig (25) nach Anspruch 1 oder 2, **dadurch gekennzeichnet, dass** jede Aussparung (26) zur Aufnahme eines Wälzkörpers (23) dazu ausgebildet ist, einen Wälzkörper (23) derart zu umhüllen, dass er axial in der Aussparung (26) gehalten wird und sichergestellt wird, dass der Käfig (25) während der Betriebsphasen in der erforderlichen Lagerstellung gehalten wird.

4. Lagerkäfig (25) nach einem der vorhergehenden Ansprüche, **dadurch gekennzeichnet, dass** die Aussparungen (26) zur Aufnahme der Wälzkörper (23) so bemessen sind, dass die Wälzkörper (23) aus den Aussparungen (26) unter der Wirkung ihres Eigengewichts herausspringen können, wobei die Wälzkörper (23) von den Aussparungen (26) zumindest in einer radialen Richtung und einer von der X-Achse zur Außenseite des Käfigs (25) verlaufenden Richtung nicht radial zurückgehalten werden.

5. Lagerkäfig (25) nach einem der vorhergehenden Ansprüche, **dadurch gekennzeichnet, dass** er eine ringförmige Hülse (250), von der axial die Aussparungen (26) zur Aufnahme der Wälzkörper (23) begrenzende Trennstege (251) ausgehen, umfasst und dass er an der Stirnfläche (253) gegenüber der ringförmigen Hülse (250) ausgebildete Öffnungen (252) aufweist.

6. Lagerkäfig (25) nach Anspruch 5, **dadurch gekennzeichnet, dass** die Hülse (250) ein ihrer Stirnfläche (253) axial gegenüberliegendes axiales Ende (254) aufweist, das ein Rotationsprofil umfasst, das so ausgebildet ist, dass die Zentrierung des Funktionselements (40) sichergestellt wird.

7. Lagerkäfig (25) nach einem der vorhergehenden Ansprüche, **dadurch gekennzeichnet, dass** jede Aussparung (26) eine Kontaktfläche (260) aufweist, die so ausgebildet ist, dass sie zu der des von ihr aufgenommenen Wälzkörpers (23) örtlich komplementär ist, wobei die Kontaktfläche (260) sich insbesondere über einen Abschnitt der kugelförmigen Hülle erstrecken kann.

8. Lagerkäfig (25) nach einem der vorhergehenden Ansprüche, **dadurch gekennzeichnet, dass** die Kupplungsschnittstelle (27) mindestens eine erste von zwei Kupplungsschnittstellen umfasst, wobei die eine aus federnden Haken (72) und die andere aus mindestens einer Nut (71) gebildet ist, wobei die erste der beiden Kupplungsschnittstellen so ausgebildet ist, dass sie mit einer zweiten der beiden Kupplungsschnittstellen (72, 71), die sich an dem Funktionselement (40) befindet, in Eingriff kommt, so dass sie vorzugsweise durch federndes Verhaken zusammenwirken.

9. Lagerkäfig (25) nach Anspruch 8, zumindest abhängig von Anspruch 6, **dadurch gekennzeichnet, dass** die Nut (71) auf der beim Kuppeln die federnden Haken aufnehmenden Seite von einem radialen Vorsprung (711) begrenzt ist, wobei der Vorsprung (711) eine Führungswandung (712) zum Führen der federnden Haken (72) während ihres Kupplungsweges umfasst, wobei die Führungswandung (712) vorzugsweise so ausgebildet ist, dass sie das Funktionselement (40) zu einer bezüglich des Käfigs (25) zentrierten Stellung führt.

10. Lagerkäfig (25) nach einem der vorhergehenden Ansprüche, **dadurch gekennzeichnet, dass** die Stirnfläche (253) des Käfigs (25) mindestens eine vorzugsweise radial innen liegende Fase (255) umfasst.

11. Wälzlager (20), das einen eine erste Lagerbahn (211) aufweisenden ersten Ring (21), einen eine zweite Lagerbahn (221) aufweisenden zweiten Ring (22), Wälzkörper (23), die in einem ringförmigen Volumen des Wälzlagers (24) zwischen der ersten und der zweiten Lagerbahn (211, 221) derart positioniert sind, dass sie eine relative Drehung des ersten und des zweiten Rings (21, 22) zueinander um eine Referenzachse (X) des Wälzlagers (20) ermöglichen, umfasst, wobei der erste Ring (21) insbesondere axial zwischen einer Lagerstellung der Wälzkörper (23) auf der ersten und der zweiten Lagerbahn (211, 221) und einer Wartungsstellung, in der die von diesen Wälzkörpern (23) getragene Last aufgehoben ist, bezüglich des zweiten Rings (22) bewegbar ist, wobei das Wälzlager (20) **dadurch gekennzeichnet ist, dass** es einen Lagerkäfig (25) nach einem der Ansprüche 1 bis 10 aufweist.

12. Wälzlager (20) nach Anspruch 11, **dadurch gekennzeichnet, dass** die Wälzkörper (23) Kugeln sind.

13. Anordnung (10) einer ersten mechanischen Unterbaugruppe (11) mit einer zweiten mechanischen Unterbaugruppe (12), die Anordnung umfassend einen eine erste Lagerbahn (211) aufweisenden ersten Ring (21), einen eine zweite Lagerbahn (221) aufweisenden zweiten Ring (22), wobei der erste Ring (21) einstückig mit der ersten Unterbaugruppe (11) und der zweite Ring (22) einstückig mit der zweiten Unterbaugruppe (12) ausgebildet ist, Wälzkörper (23), die in einem ringförmigen Volumen des Wälzlager (24) zwischen der ersten und der zweiten Lagerbahn (211, 221) derart angeordnet sind, dass sie eine relative Drehung des ersten und des zweiten Rings (21, 22) zueinander um eine Referenzachse (X) des Wälzlagers (20) ermöglichen, und einen Zugangskanal (30), der eine Verbindung der Außenumgebung mit dem ringförmigen Volumen des Wälzlagers (24) herstellt, wobei der Zugangskanal (30) einen zumindest den Durchgang der Wälzkörper (23) zulassenden inneren Querschnitt aufweist, wobei der erste Ring (21) zwischen einer Lagerstellung der Wälzkörper (23) auf der ersten und der zweiten Lagerbahn (211, 221) und einer Wartungsstellung, in der die von diesen Wälzkörpern (23) getragene Last aufgehoben ist, bezüglich des zweiten Rings (22) bewegbar ist, wobei das Wälzlager (20) einen Aussparungen (26) zur Aufnahme der Wälzkörper (23) aufweisenden Käfig (25) aufweist, wobei die Anordnung (10) **dadurch gekennzeichnet ist, dass** der Käfig (25) eine Kupplungsschnittstelle (27) mit einem Funktionselement (40) umfasst, so dass, wenn das Funktionselement (40) mit der Kupplungsschnittstelle (27) in Eingriff ist, der Lagerkäfig (25) durch das Funktionselement (40) in eine vorbestimmte Richtung (D1) bezüglich der Referenzachse (X) drehend mitnehmbar ist.

14. Anordnung (10) nach Anspruch 13, **dadurch gekennzeichnet, dass** die erste Unterbaugruppe (11) bezüglich der zweiten Unterbaugruppe (12) axial derart verstellbar ist, dass der Abstand zwischen der ersten und der zweiten Lagerbahn (211, 221) verändert werden kann.

15. Anordnung (10) nach Anspruch 13 oder 14, **dadurch gekennzeichnet, dass** das Funktionselement (40) dazu ausgebildet ist, in der Lagerstellung an dem axialen Arretieren der ersten Unterbaugruppe (11) bezüglich der zweiten Unterbaugruppe (12), insbesondere des ersten Rings (21) bezüglich des zweiten Rings (22), mitzuwirken.

16. Anordnung (10) nach einem der Ansprüche 13 bis 15, **dadurch gekennzeichnet, dass** der Lagerkäfig (25) und das Funktionselement (40) einen Kupplungsmechanismus (50) umfassen, der zwischen einer den Lagerkäfig (25) mit dem Funktionselement (40) kuppelnden Stellung, in der Kupplungsmittel (47) des Funktionselements (40) mit der Kupplungsschnittstelle (27) des Käfigs (25) derart in Eingriff stehen, dass das drehende Verstellen des Funktionselements (40) bezüglich der Referenzachse (X) in die vorbestimmte Richtung (D1) das Verstellen des Lagerkäfigs bewirkt, und einer entkuppelten Stellung, die ein derartiges Verstellen des Funktionselements (40) zulässt, dass in der Lagerstellung der erste Ring (21) axial bezüglich des zweiten Rings (22) arretiert wird, umsetzbar ist.

17. Anordnung (10) nach einem der Ansprüche 13 bis 16, **dadurch gekennzeichnet, dass** der umsetzbare Kupplungsmechanismus (50) des Lagerkäfigs (25) mit dem Funktionselement (40) federnde Haken (72) umfasst, die eine Kupplungsschnittstelle (27) bilden und dazu eingerichtet sind, unter federnder Belastung in mindestens eine eine komplementäre Kupplungsschnittstelle bildende Nut (71) einzugreifen.

18. Anordnung (10) nach einem der Ansprüche 13 bis 17, **dadurch gekennzeichnet, dass** sich das Funktionselement (40) entlang der ersten Unterbaugruppe (11) derart erstreckt, dass es von außen zugänglich ist.

19. Anordnung (10) nach einem der Ansprüche 13 bis 18, **dadurch gekennzeichnet, dass** das Funktionselement (40) eine Feststellungseinrichtung, insbesondere einen Gewindeabschnitt (41), aufweist, die ausgebildet ist, um über eine Gewindebohrung ein Arretiermittel, insbesondere einen Arretierflansch (42), aufzunehmen, wobei das Arretiermittel in der Lagerstellung so an der zweiten Unterbaugruppe (12) anliegend gehalten wird, dass seine axiale Stellung bezüglich der zweiten Unterbaugruppe (12) arretiert ist.

20. Anordnung (10) nach einem der Ansprüche 13 bis 19, **dadurch gekennzeichnet, dass** die erste mechanische Unterbaugruppe (11) eine Drehwelle ist, beispielsweise ein Flügelfuß eines Verstellpropellers, deren erstes Ende in der Lagerstellung durch die zweite mechanische Unterbaugruppe (12), wie eine rotierende Nabe des Propellers, getragen wird.

21. Verfahren zum Zusammenbauen einer Anordnung (10) nach einem der Ansprüche 13 bis 20, wobei das Zusammenbauverfahren **dadurch gekennzeichnet ist, dass** es die folgenden Schritte umfasst:
- Positionieren des Lagerkäfigs (25) in der mit dem Funktionselement (40) kuppelnden Stellung um die erste Unterbaugruppe (11) herum;
- Positionieren der aus der ersten Unterbaugruppe (11), dem Lagerkäfig (25) und dem Funktionselement (40) gebildeten Baugruppe bezüglich der zweiten Unterbaugruppe (12), wobei das Wälzlager (20) in der Wartungsstellung platziert ist;
- Öffnen des Zugangskanals (30) in der Form, dass die Wälzkörper (23) ihn in Kombination mit der Drehung des Käfigs in Richtung (D1) so durchqueren können, dass sie sich entweder in zumindest teilweise durch den Lagerkäfig (25) begrenzten Aussparungen (26) positionieren oder dort positioniert sind;
- Außereingriffbringen des Lagerkäfigs (25) und des Funktionselements (40), Verstellen des Funktionselements (40) und Verstellen der ersten Unterbaugruppe (11) bezüglich der zweiten Unterbaugruppe (12) relativ zueinander bis zu der Lagerstellung der Anordnung (10);
- axiales Arretieren der ersten mechanischen Unterbaugruppe (11) bezüglich der zweiten mechanischen Unterbaugruppe (12) in der Lagerstellung.

22. Verfahren zum Auseinanderbauen oder Warten einer Anordnung (10) nach einem der Ansprüche 13 bis 20, wobei das Auseinanderbau- oder Wartungsverfahren **dadurch gekennzeichnet ist, dass** es die folgenden Schritte umfasst:
- axiales Lösen der ersten mechanischen Unterbaugruppe (11) bezüglich der zweiten mechanischen Unterbaugruppe (12);
- Verstellen des Funktionselements (40) in Richtung des Lagerkäfigs (25), so dass es in der kuppelnden Stellung derart an seiner Kupplungsschnittstelle (27) zum Eingriff kommt, dass das Wälzlager (20) in die Wartungsstellung gebracht wird;
- drehendes Verstellen des Lagerkäfigs (25) in einer vorbestimmten Richtung (D1) um seine Referenzachse (X) derart, dass die Wälzkörper (23) in Richtung des Zugangskanals (30) geführt werden, wodurch entweder ihr Zurückziehen durch eine geeignete Aktion oder ihre Herauslösen unter der Wirkung der Schwerkraft ermöglicht wird.

## Claims

1. Cage (25) for a bearing (20), the bearing being of the type comprising a first ring (21) having a first raceway (211), a second ring (22) having a second raceway (221), and rolling bodies (23) positioned in an annular rolling volume (24) between the first and the second raceway (211, 221) so as to allow relative rotation between the first and second rings (21, 22) about a reference axis (X) of the bearing (20), the cage (25) comprising recesses (26) for housing the rolling bodies (23) and comprising a coupling interface (27) with an operating member (40), such that when the operating member (40) is engaged with the coupling interface (27), the bearing cage (25) is capable of being rotated by the operating member (40) in a predetermined direction (D1) with respect to the reference axis (X), the cage being **characterized in that** the coupling interface (27) with the operating member (40) is configured to provide a removable coupling.

2. Bearing cage (25) according to claim 1, **characterized in that** the coupling interface (27) with the operating member (40) is configured to provide a removable coupling by elastic attachment.

3. Bearing cage (25) according to either claim 1 or claim 2, **characterized in that** each recess (26) for housing a rolling body (23) is configured to enclose a rolling body (23) so as to hold it axially in said recess (26) and to ensure that the cage (25) is held in the required rolling position during the operating phases.

4. Bearing cage (25) according to one of the preceding claims, **characterized in that** the recesses (26) for housing the rolling bodies (23) are dimensioned so that the rolling bodies (23) can escape from said recesses (26) under the effect of their own weight, the recesses (26) not retaining the rolling bodies (23) radially at least in a radial direction and a direction from the axis X to the outside of the cage (25).

5. Bearing cage (25) according to one of the preceding claims, **characterized in that** it comprises an annular bush (250) from which partitions (251) axially extend that delimit the recesses (26) for housing the rolling bodies (23), and **in that** it has openings (252) formed on the front face (253) opposite said annular bush (250).

6. Bearing cage (25) according to claim 5, **characterized in that** the bush (250) has an axial end (254), axially opposite its front face (253), comprising a revolution profile configured to center the operating member (40).

7. Bearing cage (25) according to one of the preceding claims, **characterized in that** each recess (26) has a contact surface (260) configured to be locally complementary to that of the rolling body (23) that it receives, the contact surface (260) being able in particular to extend over a spherical enclosure portion.

8. Bearing cage (25) according to one of the preceding claims, **characterized in that** the coupling interface (27) comprises at least a first of two coupling interfaces, one of which is formed by elastic hooks (72) and the other of which is formed by at least one groove (71), the first of the two coupling interfaces being configured to engage, preferably to cooperate by elastic attachment, with a second of the two coupling interfaces (72, 71) that is supported by the operating member (40).

9. Bearing cage (25) according to claim 8 depending at least on claim 6, **characterized in that** the groove (71) is bordered, on the side receiving the elastic hooks during coupling, by a radial projection (711), the projection (711) comprising a guide wall (712) for guiding the elastic hooks (72) along their coupling path, the guide wall (712) preferably being configured to guide the operating member (40) toward a centered position with respect to the cage (25).

10. Bearing cage (25) according to one of the preceding claims, **characterized in that** the front face (253) of the cage (25) comprises at least one chamfer (255), preferably located radially on the inside.

11. Bearing (20) comprising a first ring (21) having a first raceway (211), a second ring (22) having a second raceway (221), and rolling bodies (23) positioned in an annular rolling volume (24) between the first and the second raceway (211, 221) so as to allow relative rotation between the first and second rings (21, 22) about a reference axis (X) of the bearing (20), the first ring (21) being movable relative to the second ring (22), in particular axially, between a rolling position of the rolling bodies (23) on the first and second raceways (211, 221) and a maintenance position in which the load borne by these rolling bodies (23) is removed, the bearing (20) being **characterized in that** it comprises a bearing cage (25) according to one of claims 1 to 10.

12. Bearing (20) according to claim 11, **characterized in that** the rolling bodies (23) are balls.

13. Assembly (10) of a first mechanical sub-assembly (11) with a second mechanical sub-assembly (12), the assembly comprising a bearing (20) comprising a first ring (21) having a first raceway (211), a second ring (22) having a second raceway (221), the first ring (21) being secured to the first sub-assembly (11) and the second ring (22) being secured to the second sub-assembly (12), rolling bodies (23) positioned in an annular rolling volume (24) between the first and the second raceway (211, 221) so as to allow relative rotation between the first and second rings (21, 22) about a reference axis (X) of the bearing, and an access channel (30) placing the external environment in communication with the annular volume of the bearing (24), the access channel (30) having an internal section allowing at least the passage of the rolling bodies (23), the first ring (21) being movable relative to the second ring (22) between a rolling position of the rolling bodies (23) on the first and second raceways (211, 221) and a maintenance position in which the load borne by these rolling bodies (23) is removed, the bearing (20) comprising a cage (25) comprising recesses (26) for housing the rolling bodies (23), the assembly (10) being **characterized in that** the cage (25) comprises a coupling interface (27) with an operating member (40), such that when the operating member (40) is engaged with the coupling interface (27), the bearing cage (25) is capable of being rotated by the operating member (40) in a predetermined direction (D1) relative to the reference axis (X).

14. Assembly (10) according to claim 13, **characterized in that** the first sub-assembly (11) is axially movable relative to the second sub-assembly (12) so that the distance between the first and the second raceway (211, 221) can be changed.

15. Assembly (10) according to either claim 13 or claim 14, **characterized in that** the operating member (40) is configured to participate in the axial locking of the first sub-assembly (11) relative to the second sub-assembly (12), in particular of the first ring (21) relative to the second ring (22), in the rolling position.

16. Assembly (10) according to one of claims 13 to 15, **characterized in that** the bearing cage (25) and the operating member (40) comprise a coupling mechanism (50) which is movable between a position coupling the bearing cage (25) with the operating member (40), in which position coupling means (47) of the operating member (40) are engaged with the coupling interface (27) of the cage (25) so that the rotating movement of the operating member (40) in the predetermined direction (D1) relative to the reference axis (X) causes the movement of the bearing cage, and an uncoupled position allowing the movement of the operating member (40) so as to axially lock the first ring (21) relative to the second ring (22) in the rolling position.

17. Assembly (10) according to one of claims 13 to 16, **characterized in that** the mechanism (50) for removably coupling the bearing cage (25) to the operating member (40) comprises elastic hooks (72) which form a coupling interface (27) and are configured to engage under elastic stress in at least one groove (71) forming a complementary coupling interface.

18. Assembly (10) according to one of claims 13 to 17, **characterized in that** the operating member (40) extends along the first sub-assembly (11) so as to be accessible from the outside.

19. Assembly (10) according to one of claims 13 to 18, **characterized in that** the operating member (40) has a fixing device, in particular a threaded portion (41), configured to receive a locking means, in particular a locking flange (42), through a tapped bore, the locking means being held in abutment against the second sub-assembly (12) in the rolling position to lock its axial position relative to the second sub-assembly (12).

20. Assembly (10) according to one of claims 13 to 19, **characterized in that** the first mechanical sub-assembly (11) is a rotary shaft, for example a blade root of a variable-pitch propeller, a first end of which is supported in the rolling position by the second mechanical sub-assembly (12) such as a rotating hub of the propeller.

21. Method for assembling an assembly (10) according to one of claims 13 to 20, the assembly method being **characterized in that** it comprises the following steps:
- positioning the bearing cage (25) in the coupling position with the operating member (40) around the first sub-assembly (11);
- positioning the assembly formed by the first sub-assembly (11), the bearing cage (25) and the operating member (40) relative to the second sub-assembly (12), the bearing (20) being placed in the maintenance position;
- opening the access channel (30) so that the rolling bodies (23) can pass through it to either come into position or be positioned in recesses (26) delimited at least in part by the bearing cage (25), in combination with rotating the cage in direction (D1);
- disengaging the bearing cage (25) and the operating member (40), moving the actuator (40), and moving the first sub-assembly (11) relative to the second sub-assembly (12), up to the rolling position of the assembly (10); and
- axially locking the first mechanical sub-assembly (11) relative to the second mechanical sub-assembly (12), in the rolling position.

22. Method for disassembling or maintaining an assembly (10) according to one of claims 13 to 20, the disassembly or maintenance method being **characterized in that** it comprises the following steps:
- axially unlocking the first mechanical sub-assembly (11) relative to the second mechanical sub-assembly (12);
- moving the operating member (40) toward the bearing cage (25) to engage on the coupling interface (27) of said cage in the coupling position so that the bearing (20) is brought into the maintenance position; and
- rotationally moving the bearing cage (25) in a predetermined direction (D1) about its reference axis (X) to drive the rolling bodies (23) toward the access channel (30) allowing either the removal of said bodies by an appropriate action, or the release of said bodies under the effect of gravity.
